(19) Europäisches Patentamt
European Patent Office
Office européen des brevets

(11) EP 4 665 068 A1

(12) EUROPEAN PATENT APPLICATION
published in accordance with Art. 153(4) EPC

(43) Date of publication:
17.12.2025 Bulletin 2025/51

(51) International Patent Classification (IPC):
H04W 74/0833 (2024.01)  H04W 72/0453 (2023.01)
H04L 5/14 (2006.01)

(21) Application number: 24758130.9

(22) Date of filing: 26.04.2024

(52) Cooperative Patent Classification (CPC):
H04W 74/0833; H04L 5/14; H04W 72/0453

(86) International application number:
PCT/CN2024/090197

(87) International publication number:
WO 2025/222515 (30.10.2025 Gazette 2025/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: New H3C Technologies Co., Ltd.
Hangzhou, Zhejiang 310052 (CN)

(72) Inventors:
• ZHOU, Lei
  Beijing 100102 (CN)
• KONG, Lei
  Beijing 100102 (CN)
• ZHANG, Jun
  Beijing 100102 (CN)

(74) Representative: IPAZ
Bâtiment Platon
Parc Les Algorithmes
91190 Saint-Aubin (FR)

(54) **RANDOM ACCESS METHODS AND APPARATUSES, BASE STATION AND TERMINAL**

(57) Examples of the present disclosure provide a random access method and apparatus, a base station, and UE, which relate to the field of communication technology. The method is applied to the base station, comprising: receiving a preamble reported by the UE on a valid RO resource, wherein the valid RO resource is selected from all of RO resources by the UE, and there is a first RO resource overlapping with an SBFD resource in all of the RO resources; sending a RA response to the UE based on the preamble, so that the UE randomly access the base station through CBRA or CFRA. The solution provided by the examples of the present disclosure can be applied to reduce an uplink access delay of the UE, thereby improving the user experience of the UE and meeting the performance requirements for service continuity.

receiving a preamble reported by UE on a valid RO resource — S301

sending a RA response to the UE based on the preamble, so that the UE randomly accesses the base station through CBRA or CFRA — S302

FIG. 3

Description

TECHNICAL FIELD

The present disclosure relates to the field of communication technology, and in particular to a random access method and apparatus, a base station, and user equipment.

BACKGROUND

A traditional TDD (Time-Division Duplex) communication system works in a HD (Half-Duplex) mode, and its frame structure can be strictly divided into a DL (Downlink) resource, an S (Special) resource and a UL (Uplink) resource, wherein according to actual needs, the S resource can also be configured as an uplink resource, a downlink resource or a GP (Guard Period) resource. In order to improve network throughput in the current network, more DL resources are usually configured, which results in fewer UL resources and limitation of uplink transmission rate of user equipment (UE).

In this case, in the process of UE random access, a RO (Physical Random Access Channel Occasion) resource used when the UE reports a preamble is located in the UL resource of a TDD time domain resource, that is, the UE uses the UL resource to report the preamble to a base station. However, as the number of cell service end-users increases, fewer UL resources can be used for a large number of pieces of UE for random access, which will lead to an increase in uplink access delay of the UE, resulting in poor user experience and failure to meet the performance requirements for service continuity.

SUMMARY

The purpose of examples of the present disclosure is to provide a random access method and apparatus, a base station, and UE to reduce an uplink access delay of the UE. The specific technical solutions are as follows:
In a first aspect, an example of the present disclosure provides a random access method, which is applied to a base station, the method including:

    receiving a preamble reported by user equipment UE on a valid physical random access channel occasion RO resource, wherein the valid RO resource is selected by the UE from all of RO resources, and there is a first RO resource overlapping with a sub-band full duplex SBFD resource in all of the RO resources;

    sending a random access RA response to the UE based on the preamble, so that the UE randomly accesses the base station through contention based random access CBRA or through non contention or contention free random access CFRA.

In a second aspect, an example of the present disclosure provides a random access method, which is applied to user equipment UE, the method including:

    selecting a valid physical random access channel occasion resource from all of RO resources, wherein all of the RO resources comprise multiple first RO resources overlapping with a sub-band full duplex SBFD resource;

    reporting a preamble to a base station through the selected valid RO resource, so that the base station sends a random access RA response to the UE based on the preamble;

    based on the RA response, randomly accessing the base station through contention based random access CBRA or through non contention or contention free random access CFRA.

In a third aspect, an example of the present disclosure provides a random access apparatus, which is applied to a base station, the apparatus including:

    a preamble receiving module, to receive a preamble reported by user equipment UE on a valid physical random access channel occasion RO resource, wherein the valid RO resource is selected by the UE from all of RO resources, and there is a first RO resource overlapping with a sub-band full duplex SBFD resource in all of the RO resources;

    a first random access module, to send a random access RA response to the UE based on the RA response, so that the UE randomly accesses the base station through contention based random access CBRA or through non contention or contention free random access CFRA.

In a fourth aspect, an example of the present disclosure provides a random access apparatus, which is applied to user equipment UE, the apparatus including:

a resource selecting module, to select a valid physical random access channel occasion RO resource from all of RO resources, wherein all of the RO resources include multiple first RO resources overlapping with a sub-band full duplex SBFD resource;

a preamble reporting module, to report a preamble to a base station through the selected valid RO resource, so that the base station sends a random access RA response to the UE based on the preamble;

a second random access module, to randomly access the base station based on the RA response through contention based random access CBRA or through non contention or contention free random access CFRA.

In a fifth aspect, an example of the present disclosure provides a base station, including:

a processor;

a transceiver;

a machine-readable storage having machine-executable instructions stored therein that can be executed by the processor; the machine-executable instructions cause the processor to:

receive a preamble reported by user equipment UE on a valid physical random access channel occasion RO resource, wherein the valid RO resource is selected by the UE from all of RO resources, and there is a first RO resource overlapping with a sub-band full duplex SBFD resource in all of the RO resources;

send a random access RA response to the UE based on the preamble, so that the UE randomly accesses the base station through contention based random access CBRA or through non contention or contention free random access CFRA.

In a sixth aspect, an example of the present disclosure provides user equipment UE, including:

a processor;

a transceiver;

a machine-readable storage medium having machine-executable instructions stored therein that can be executed by the processor; the machine-executable instructions cause the processor to:

select a valid physical random access channel occasion RO resource from all of RO resources, wherein all of the RO resources include multiple first RO resources overlapping with a sub-band full duplex SBFD resource;

report a preamble to a base station through the selected valid RO resource, so that the base station sends a random access RA response to the UE based on the preamble;

based on the RA response, randomly access the base station through contention based random access CBRA or through non contention or contention free random access CFRA.

In an seventh aspect, an example of the present disclosure provides a machine-readable storage medium having machine-executable instructions stored therein, the machine-executable instructions, when called and executed by a processor, cause the processor to carry out the method in either the first aspect or the second aspect.

In an eighth aspect, an example of the present disclosure provides a computer program product, which causes a processor to carry out the method in either the first aspect or the second aspect.

Beneficial effects of the examples of the present disclosure:

In the solutions provided by the examples of the present disclosure, all of the RO resources include multiple first RO resources overlapping with an SBFD resource. Therefore, when selecting a RO resource for preamble reporting, the UE can select a first RO resource. Since the SBFD resource is a full-duplex resource, that is, the UE can perform uplink data transmission and downlink data transmission simultaneously, thereby introduction of the SBFD resource can increase the amount of UL resources. On this basis, since the UE can report the preamble through the first RO resource overlapping with the SBFD resource, it is equivalent to increasing the UL resources that can be used by the UE when reporting the preamble, thereby reducing uplink access delay of the UE, further improving an user experience at the UE to meet the performance requirements for service continuity.

**BRIEF DESCRIPTION OF THE DRAWINGS**

In order to more clearly describe the technical solutions of the examples of the disclosure and the prior art, accompanying drawings that need to be used in the examples and the prior art will be briefly described below. Obviously, accompanying drawings described below are for only some of examples of the disclosure. Those skilled in the art may also obtain other examples based on these accompanying drawings without any creative efforts.

Figure 1 is a schematic diagram of HD communication provided by the related art;
Figure 2 is a schematic diagram of FD communication provided by the related art;
Figure 3 is a schematic flow of a first random access method provided by an example of the present disclosure;
Figure 4 is a first schematic diagram of RO resource distribution provided by an example of the present disclosure;
Figure 5 is a second schematic diagram of RO resource distribution provided by an example of the present disclosure;
Figure 6 is a third schematic diagram of RO resource distribution provided by an example of the present disclosure;
Figure 7 is a fourth schematic diagram of RO resource distribution provided by an example of the present disclosure;
Figure 8 is a schematic diagram of valid RO resource distribution provided by an example of the present disclosure;
Figure 9 is a schematic flow of RO resource validity determination provided by an example of the present disclosure;
Figure 10 is a schematic diagram of a first matching relationship between SSB and RO resources provided by an example of the present disclosure;
Figure 11 is a schematic diagram of a second matching relationship between SSB and RO resources provided by an example of the present disclosure;
Figure 12 is a fifth schematic diagram of RO resource distribution provided by an example of the present disclosure;
Figure 13 is a sixth schematic diagram of RO resource distribution provided by an example of the present disclosure;
Figure 14 is a seventh schematic diagram of RO resource distribution provided by an example of the present disclosure;
Figure 15 is a schematic flow of a second random access method provided by an example of the present disclosure;
Figure 16 is a first schematic diagram of RO resource group provided by an example of the present disclosure;
Figure 17 is a second schematic diagram of RO resource group provided by an example of the present disclosure;
Figure 18 is a third schematic diagram of RO resource group provided by an example of the present disclosure;
Figure 19 is a fourth schematic diagram of RO resource group provided by the example of the present disclosure;
Figure 20 is a schematic flow of a third random access method provided by the example of the present disclosure;
Figure 21 is an eighth schematic diagram of RO resource distribution provided by an example of the present disclosure;
Figure 22 is a ninth schematic diagram of RO resource distribution provided by an example of the present disclosure;
Figure 23 is a schematic flow of a fourth random access method provided by an example of the present disclosure;
Figure 24 is a schematic structural diagram of a random access apparatus applied to a base station provided by an example of the present disclosure;
Figure 25 is a schematic structural diagram of a random access apparatus applied to UE provided by an example of the present disclosure;
Figure 26 is a schematic structural diagram of a base station provided by an example of the present disclosure;
Figure 27 is a schematic structural diagram of UE provided by an example of the present disclosure.

**DETAILED DESCRIPTION**

The technical solutions in the examples of the present disclosure will be clearly and completely described below with reference to the accompanying drawings in the examples of the present disclosure. Obviously, the described examples are only some, and not all, of the examples of the present disclosure. All other examples obtained based on the examples of the present disclosure by those skilled in the art without any creative efforts fall into the scope of protection of the application.

Since in the process of communicating in an HD mode, there are problems of fewer UL resources and a limitation of an uplink transmission rate of UE. In order to deal with the above problems, FD (Full-Duplex) communication has been proposed in related art. In FD communication, a base station can send and receive data simultaneously. That is, an uplink data transmission and a downlink data transmission can be performed simultaneously, thereby increasing uplink transmission resources and improving the uplink transmission rate of the UE. Specifically, an SBFD (Sub-band full duplex) technology is proposed in related art, which uses a frequency domain resource to distinguish downlink and uplink, and allows gNB to transmit DL data and UL data simultaneously. In this case, a time domain resource for data transmission can be divided into a traditional TDD time domain resource and an SBFD time domain resource. The TDD time domain resource includes a traditional UL resource that only transmits UL data at the same time and a traditional DL resource that only transmits DL data at the same time. The SBFD time domain resource includes a time domain resource that transmit both of the UL data and DL data simultaneously .

However, since the FD communication can send and receive data simultaneously, it will introduce an additional SI (Self-Interference), an inter-cell interference, an inter-user interference and other factors that affect communication quality. SI has the most serious impact on the communication quality.

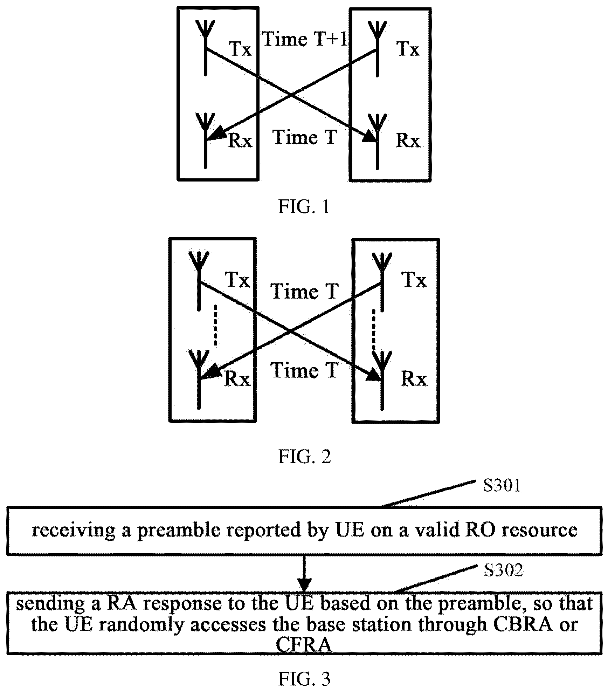

Refer to Figure. 1, which is a schematic diagram of HD communication provided by the related art.

There are two communication devices on the left and right, respectively, in Figure 1. Tx represents a transmitting antenna in the communication device, and Rx represents a receiving antenna in the communication device. The solid arrows in the figure represent the directions of data transmission. At time T, the transmitting antenna of the left communication device transmits data to the receiving antenna of the right communication device. At time T+1, the transmitting antenna of the right communication device transmits data to the receiving antenna of the left communication device.

Refer to Figure. 2, which is a schematic diagram of FD communication provided by the related art.

There are two communication devices on the left and right, respectively, in Figure 2. Tx represents a transmitting antenna in the communication device, and Rx represents a receiving antenna in the communication device. The solid arrows in the figure represent the directions of data transmission. At time T, the transmitting antenna of the left communication device transmits data to the receiving antenna of the right communication device. Moreover, at time T, the transmitting antenna of the right communication device can also transmit data to the receiving antenna of the lest communication device. The dotted lines in the figure represent SI between the transmitting antenna and the receiving antenna in the same communication device.

It can be seen that at the same time, only one-way data transmission can be performed between communication devices that use HD communication, but two-way data transmission can be performed between communication devices that use FD communication.

In addition, a random access process in the related art is described. There are two random access modes in the related art: CBRA (Contention Based Random Access) and CFRA (Non Contention or Contention Free Random Access).

For CBRA, UE interacts with a network side through Msg (Message) 1, Msg2, Msg3 and Msg4 to enable the UE to access the network. This process is also referred to as 4-Step RACH (4-Step Random Access Channel). In addition, in order to further optimize the process of UE random access to reduce delay and reduce signaling overhead, CFRA is proposed. If CFRA is used for random access, in order to enable the UE to access the network, only Msg1 and Msg2 need to be transmitted between the UE and the network side. This process is also referred to as 2-Step RACH (2-Step Random Access Channel).

CBRA is first described. In the process of CBRA, the UE randomly selects a preamble from a preamble pool shared with other UE, which means that different pieces of UE may select the same preamble, so there is a problem for two pieces of UE competing to use the preamble. In this process, whether the UE can successfully access is random, and not all random access processes can succeed.

The specific steps of CBRA include the following steps A1 to A4.

Step A1: UE sends Msg1 including a preamble to a base station.

Step A2: after receiving Msg1, the base station applies for TC-RNTI (Temporary Cell-Radio Network Temporary Identity), uplink and downlink scheduling resources, sends a RA (Random Access) response to the UE through PDSCH (Physical Downlink Shared Channel). The above RA response includes a RA preamble identifier, time adjustment information, an initial uplink scheduling and TC-RNTI.

Wherein, a PDSCH can carry a RA response to be sent to multiple pieces of UE. After the UE executes step A1 of sending the preamble, the UE monitors the PDCCH (Physical Downlink Control Channel) and waits for the RA response sent by the base station within the RA response window.

If the UE receives the RA response including the RA preamble identifier, the UE verifies the RA response. That is, if it is verified that the RA preamble identifier is consistent with the preamble sent by the UE to the base station, the RA response is successful. The UE can continue to execute step A3 to send uplink scheduling information to the base station.

If the UE does not receive the RA response within the RA response window, or the RA response verification fails, then if the RA attempt times are less than a preset upper limit of times, the UE may re-execute step A1 to attempt RA. Otherwise, the UE RA fails.

Step A3: the UE sends uplink scheduling information through PUSCH (Physical Uplink Shared Channel).

The uplink scheduling information sent by the UE is different in different RA scenarios, and the following are different examples 1-4 of the uplink scheduling information.

1. In an Initial RRC connection setup (Initial Radio Resource Control connection setup) scenario, the uplink scheduling information is a RRCSetupRequest (Radio Resource Control setup Request) message. This message is transmitted in TM (Transport Mode) over CCCH (Common Control Channel) in a RLC (Radio Link Control) layer. The message includes the NAS UE__ID (Network Attached Storage User Engine_identification) network, and the message is not segmented.

2. In a RRC connection reestablishment (Radio Resource Control connection reestablishment) scenario, the uplink scheduling information is a RRC (Radio Resource Control) reconstruction request message. This message is transmitted in TM over CCCH of the RLC layer. This message does not carry a NAS (Non-Standalone) message and is not segmented.

3. In a Handover scenario, if the UE accesses a target cell and has no dedicated preamble during the handover process, contention based RA is triggered. The uplink scheduling information is a RRC handover confirmation message and a C-RNTI (Cell-Radio Network Temporary Identity). This information is transmitted through DCCH (Dedicated Control Channel). This information will further carry a BSR (Buffer Status Report) if required.

4. Other scenarios: the uplink scheduling information at least includes the C-RNTI of the UE.

Step A4: after the UE sends Msg3, a 4 ms contention resolution timer of the UE starts counting. The base station uses the C-RNTI on the PDCCH or UE contention resolution identity on the PDSCH to assist the UE in contention resolution.
The UE continues to monitor the PDCCH before the timer expires. When any of the following conditions is met, it is considered that the contention resolution is successful and the timer is stopped.

(1) The UE obtains the C-RNTI through the PDCCH.

(2) The UE obtains the TC-RNTI through the PDCCH, and a MAC-PDU (Media Access Control Protocol Data Unit) is successfully decoded. Specifically, the UE contention resolution identity received through the PDSCH is the same as that carried in Msg3 sent by the UE.

If the contention resolution timer expires, the UE will consider that the contention resolution has failed. Then, if the RA attempt times do not reach the preset upper limit of times, the UE executes RA again. If the RA attempt times reach the preset upper limit of times, the RA is failed.
The specific steps of CFRA include the following steps B1 to B3.
Step B1: a base station allocates a preamble to UE , and sends the preamble to the UE using a RRC message or DCI (Downlink Control Information).
The following are scenarios where the base station sends a preamble:

(1) a scenario where the UE performs base station handover. Mobilitycontrollinfo IE (mobilitycontrollinfo Information Elements) carries the preamble.

(2) a scenario of DL data arrival. When downlink data arrives at the base station, the base station controls the UE to initiate random access through DCI on the PDCCH, wherein the PDCCH carries the allocated preamble.

(3) a NSA scenario. When a NR (New Radio) cell is added in NSA, the base station controls the UE to initiate random access through the PDCCH, which carries the allocated preamble.

Step B2: the UE transmits Msg1 including the preamble to the base station.
Step B3: the base station sends a RA response (Msg2) to the UE.
In the scenario where the UE performs base station handover, the RA response includes the time adjustment information and the initial uplink scheduling information.
In the scenario of DL data arrival, the RA response includes timing alignment information and a RA preamble identifier.
In the NSA scenario, the RA response includes the timing alignment information and the RA preamble identifier.
It can be seen from the above related art that no matter whether CBRA or CFRA is used for random access of the UE, the UE needs to report the preamble to the base station, and the process of the UE reporting the preamble needs to occupy UL resources. However, when UL resources are fewer, the use of UL resources will increase uplink access delay of the UE, resulting in poor user experience at the UE and failure to meet the performance requirements for service continuity.

In order to solve the above problems, the examples of the present disclosure provide a random access method and apparatus, a base station, and UE.

Refer to Figure 3, which is a schematic flow of a first random access method provided by an example of the present disclosure, which is applied to a base station, including the following blocks S301-S302.

S301: receiving a preamble reported by UE on a valid RO resource.

Wherein the valid RO resource is selected by the UE from all of RO resources, and there is a first RO resource overlapping with an SBFD resource in all of the RO resources.

In one example of the present disclosure, in the time domain, all of data transmission resources between the base station and the UE may be SBFD resources that use full-duplex technology for communication. Alternatively, the data transmission resources may also be divided into an SBFD resource that uses full-duplex technology for communication and a non-SBFD resource that does not use full-duplex technology for communication.

In an SBFD resource, full-duplex communication can be performed between the base station and the UE, that is, both of uplink data transmission and downlink data transmission can be performed at the same time. In a non-SBFD resource, half-duplex communication can be performed between the base station and the UE, that is, only uplink data transmission or downlink data transmission can be performed at the same time.

In the case that all of data transmission resources are SBFD resources, all of RO resources are located in the SBFD resources, that is, all of the RO resources are first RO resources.

In the case that the data transmission resources are divided into an SBFD resources and a non-SBFD resource, all of RO resources can be configured in the SBFD resource, or configured in the non-SBFD resource, or some of all of the RO resources can be configured in the SBFD resource and the other of all of the RO resources can be configured in the non-SBFD resource. All of the RO resources overlapping with the SBFD resource are the first RO resources in the present disclosure.

In addition, since the preamble is data reported by the UE to the base station, it is uplink data, thus the RO resource used to transmit the preamble is located in the UL resource. If the RO resource is located in the SBFD resource, the frequency domain position of the RO resource overlaps with a frequency band for transmitting uplink data in the SBFD resource. If the RO resource is located in the non-SBFD resource, the RO resource is located in a time period for transmitting uplink data in the non-SBFD resource.

Furthermore, as described above, the preamble is included in Msg1 sent by the UE to the base station, Therefore, what the UE transmits to the base station in the selected RO resource is Msg1, which includes the preamble.

In addition, it should be noted that all of the RO resources are configured for all pieces of UE. However, the valid RO resource that can be used to report the preamble is varied for different pieces of UE. For UE, the UE can only upload the preamble in the RO resource that are valid for the UE, and cannot upload the preamble in the RO resource that are invalid for the UE. Specifically for UE, the method for determining whether the RO resource is valid can be referred below, and will not be described in detail here. The UE can select any RO resource that is valid for itself to report the preamble.

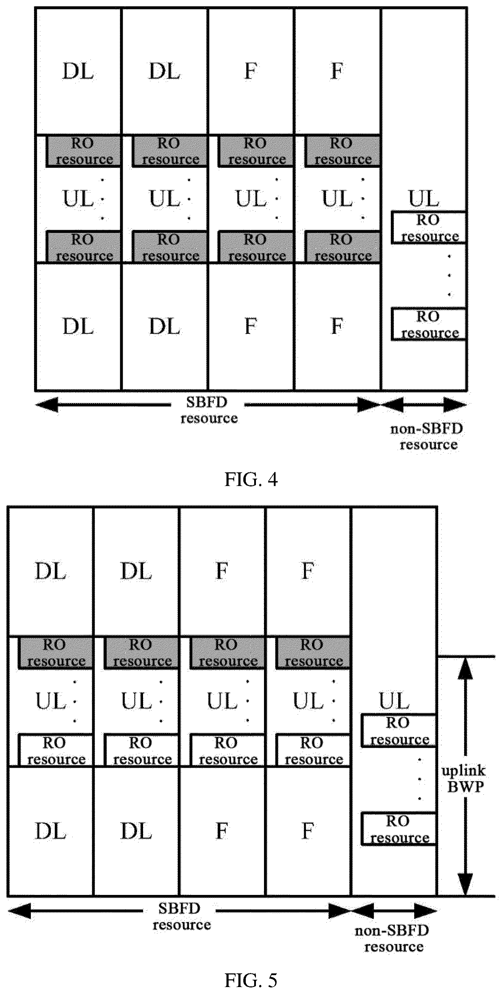

Refer to Figure 4, which is a first schematic diagram of RO resource distribution provided by the example of the present disclosure.

In the figure, the horizontal direction represents the time domain, and the vertical direction represents the frequency domain. In the figure, an SBFD resource and a non-SBFD resource are included, in which the SBFD resource is divided into a DL resource, a UL resource and an F (Flexible) resource. The entire non-SBFD resources in the figure is the UL resource. Among RO resources included in the figure, a RO resource marked in gray is the first RO resource overlapping with the SBFD resource, and a RO resource marked in white is the other RO resource except the first RO resource.

S302: sending a RA response to the UE based on the preamble, so that the UE randomly accesses the base station through CBRA or CFRA.

Specifically, after the UE reports the preamble through the RO resource, if the CBRA is used for random access, the base station and the UE continue to execute the aforementioned steps A2 to A4, thereby completing the random access process of the UE. If the CFRA is used for random access, the base station executes the aforementioned step B3, thereby completing the random access process of the UE. The specific method for the UE to complete the random access process is not repeated in this example.

As can be seen above, in the solutions provided by the examples of the present disclosure, all of the RO resources include multiple first RO resources overlapping with an SBFD resource. Therefore, when selecting a RO resource for preamble reporting, the UE can select a first RO resource. Since the SBFD resource is a full-duplex resource, that is, the UE can perform uplink data transmission and downlink data transmission simultaneously, thereby introduction of the SBFD resource can increase the amount of UL resources. On this basis, since the UE can report the preamble through the first RO resource overlapping with the SBFD resource, it is equivalent to increasing the UL resources that can be used by the UE when reporting the preamble, thereby reducing uplink access delay of the UE, further improving an user experience at the UE to meet the performance requirements for service continuity.

In one example of the present disclosure, due to the new addition of the SBFD resource in the present disclosure, the RO resource located in the SBFD resource may conflict with other resources in the SBFD resource except the UL resources and/ or with the frequency domain resource of the UE. In view of this, a validity determination can be made within the RO resource and the uplink subband (UL subband) and/ or the uplink BWP (Bandwidth Part).

For each RO resource, when the frequency domain position of the RO resource exceeds the uplink subband and/ or the uplink BWP used by the UE, the validity determination shall follow one of the following criteria (1)-(3).

Since the RO resource is used for reporting the preamble by the UE to the base station, that is, the RO resource is used for uplink data transmission, theoretically the RO resource should be located in the UL resource that is within the uplink subband in the SBFD resource. Further, the uplink BWP used by the UE is a frequency band allocated to the UE for the UE to transmit uplink data, therefore, theoretically the frequency domain position of the RO resource should be located in the uplink subband and/ or uplink BWP used by the UE.

Different pieces of UE use different uplink BWPs. Therefore, for each first RO resource, different pieces of UE have different determining results on whether the first RO resource is valid.

Specifically, for each RO resource, if the frequency domain position of the RO resource exceeds the uplink subband and/ or the uplink BWP used by the UE, then in one possibility, the RO resource is located within the UL resource in the SBFD resource, but exceeds the uplink BWP used by the UE.

Refer to Figure 5, which is a second schematic diagram of RO resource distribution provided by an example of the present disclosure.

In the figure, the horizontal direction represents the time domain, and the vertical direction represents the frequency domain. An SBFD resource and a non-SBFD resource are included, wherein the SBFD resource is divided into a DL resource, a UL resource, and an F resource. The entire non-SBFD resource in the figure is the UL resource. Among RO resources included in the figure, a RO resource marked in gray is located within the UL resource in the SBFD resource, but exceeds the uplink BWP used by the UE.

In addition, if the frequency domain position of a RO resource exceeds the UL subband and/or uplink BWP used by the UE, then in another possibility, the RO resource exceeds the UL resource in the SBFD resource and exceeds the uplink BWP used by the UE.

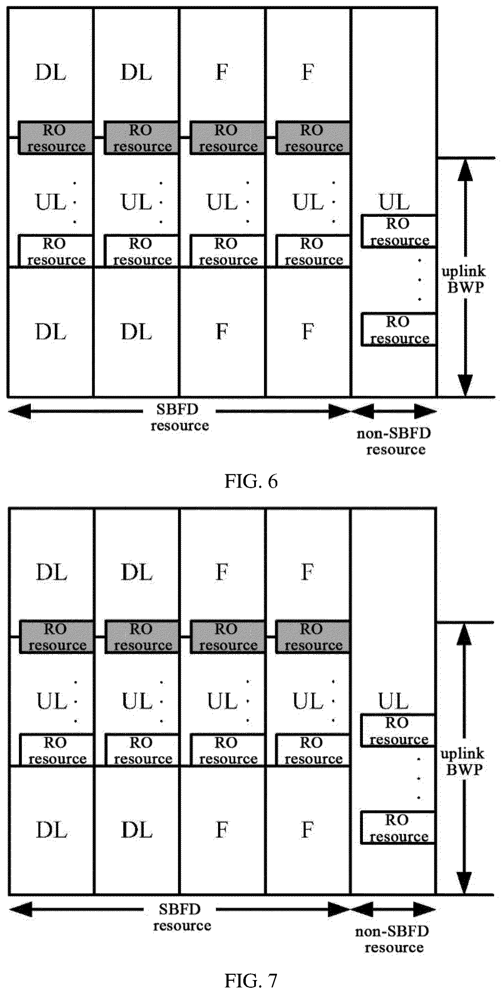

Refer to Figure 6, which is a third schematic diagram of RO resource distribution provided by an example of the present disclosure.

In the figure, the horizontal direction represents the time domain, and the vertical direction represents the frequency domain. An SBFD resource and a non-SBFD resource are includes, wherein the SBFD resource is divided into a DL resource, a UL resource, and an F resource. The entire non-SBFD resource in the figure is the UL resource. Among RO resources included in the figure, a RO resource marked in gray exceeds the UL resource in the SBFD resource, and exceeds the uplink BWP used by the UE.

In addition, when the RO resource exceeds the UL resource in the SBFD resource, it means that the RO resource occupies both of the UL resource, and the DL resource or F resource. Alternatively, the RO resource is entirely located in the DL resource or F resource. In this case, the RO resource may be located within the uplink BWP, or may exceed the range of the uplink BWP.

Refer to Figure 7, which is a fourth schematic diagram of RO resource distribution provided by an example of the present disclosure.

In the figure, the horizontal direction in the figure represents the time domain, and the vertical direction represents the frequency domain. An SBFD resource and a non-SBFD resource are included, wherein the SBFD resource is divided into a DL resource, a UL resource, and an F resource. The entire non-SBFD resources in the figure is the UL resource. Among the RO resources included in the figure, a RO resource marked in gray exceeds the UL resource in the SBFD resource. In this example, the UL resource exceeding the SBFD resource occupies both of the UL resource, and the DL resource or F resource, and such a RO resource is located within the range of the uplink BWP.

For this type of RO resource, the validity determination shall follow one of the following criteria (1)-(3).

(1) For each RO resource, if the frequency domain position of the RO resource exceeds the uplink subband and/or uplink bandwidth part BWP used by the UE, the RO resource is invalid.
Specifically, for each RO resource, if the frequency domain position of the RO resource exceeds the uplink subband and/or uplink BWP used by the UE, the RO resource is invalid as a whole.

(2) If the RO resource is located within an SBFD symbol and overlaps with a downlink time domain resource or a flexible time domain resource, the RO resource is valid, or a part of the RO resource that is located within the SBFD symbol and within the uplink BWP used by the UE is valid; the above downlink time domain resource includes a downlink time slot and a downlink symbol, and the above flexible time domain resource includes a flexible time slot and a flexible symbol.

Specifically, if the part of the RO resource located within the SBFD symbol and within the uplink BWP is valid, all of other parts of the RO resource except the valid part are invalid.

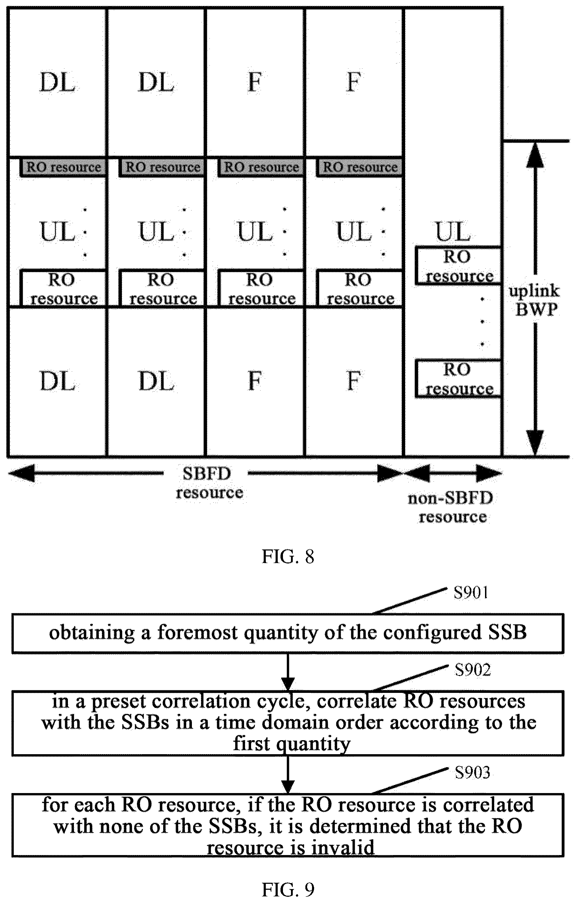

Refer to Figure 8, which is a schematic diagram of a valid RO resource distribution provided by an example of the present disclosure.

Figure 8 is a schematic diagram of the RO resource shown in Figure 7 with the invalid parts being removed. It can be seen from the figure that the part located within the SBFD symbol and within the uplink BWP in Figure 7 is valid, and other parts are invalid. In Figure 8, only the valid part is remained.

(3) For each RO resource, if the frequency domain position of the RO resource exceeds the uplink subband and/or uplink BWP used by the UE, the RO resource is valid.

Specifically, for each RO resource, if the frequency domain position of the RO resource exceeds the uplink subband and/or uplink BWP of the UE, the RO resource is valid as a whole. That is, although the RO resource exceeds the uplink subband and/or uplink BWP of the UE, the RO resource can still be used by the UE to transmit the preamble.

As can be seen above, in the examples of the present disclosure, when the configured RO resource exceeds the uplink subband and/or uplink BWP used by the UE, and when the configured RO resource exceeds the UL resource in the SBFD resource, the validity of the RO resource is defined. Thus, the conflict between the RO resource and the frequency domain resource other than the uplink subband and/or uplink BWP can be resolved, and the conflict between the RO resource and other resources other than the UL resource can be resolved.

In another example of the present disclosure, due to the new addition of the SBFD resource in the present disclosure, the RO resource may be located in the SBFD resource. Therefore, it is necessary to map the RO resource in the SBFD resource to the SSB (Synchronization Signal Block), in order to upload the preamble based on the SSB. For this purpose, the validity of the RO resource and SSB mapping (Synchronization Signal Block mapping) or CSI-RS (Channel Status Information-Reference Signal) can be determined.

Refer to Figure 9, which is a schematic flow of RO resource validity determination provided by an example of the present disclosure, including the following blocks S901-S903.

S901: obtaining a first quantity of configured SSBs.

The SSBs are configured by the base station. Therefore, the first quantity of SSBs is a known to the base station.

S902: in a preset correlation cycle, correlating RO resources with the SSBs in a time domain order according to the first quantity.

The correlation between the SSBs and RO resources is performed in one or more correlation cycles. Starting from the 0th frame of the correlation cycle, the SSB indexing is performed for an integer number of times in an order of time domain positions of RO resources from front to back. Each index will correlate each of the SSBs with the RO resource(s). The RO resource with the front time domain position is preferentially correlated with an SSB.

The quantity of RO resources correlated with each of the SSBs is a preset quantity. Therefore, the total quantity of RO resources correlated with all of the SSBs is a target product of the above first quantity and the preset quantity. The preset quantity can be greater than 0 and less than 1, or greater than or equal to 1.

Specifically, the above preset quantity can be configured through a fifth parameter, which can be referred to as ssb-perRACH-OccasionAndCB-PreamblesPerSSB (SSB-per RO resource and contention based preambles-per SSB). The fifth parameter is used to define the quantity of the SSBs correlated with each RO resource, which is the inverse of the above preset quantity. The fifth parameter can further define the quantity of contention based preambles for each SSB on each valid RO resource.

In one example, the fifth parameter may be defined as:

```
ssb-perRACH-OccasionAndCB-PreamblesPerSSB      CHOICE {
oneEighth    ENUMERATED {n4,n8,n12,n16,n20,n24,n28,n32,n36,n40,n44,n48,n52,n56,n60,n64},
oneFourth    ENUMERATED {n4,n8,n12,n16,n20,n24,n28,n32,n36,n40,n44,n48,n52,n56,n60,n64},
oneHalf    ENUMERATED {n4,n8,n12,n16,n20,n24,n28,n32,n36,n40,n44,n48,n52,n56,n60,n64},
one    ENUMERATED {n4,n8,n12,n16,n20,n24,n28,n32,n36,n40,n44,n48,n52,n56,n60,n64},
two    ENUMERATED {n4,n8,n12,n16,n20,n24,n28,n32},
four    INTEGER (1..16),
eight    INTEGER (1..8),}
```

wherein, oneEighth, oneFourth, oneHalf, one, two, four, eight are used to define the quantity of SSBs correlated with each RO resource. The others are used to define the quantity of contention based preambles for each SSB on each valid RO resource corresponding to a different quantity of SSBs correlated with each RO resource.

It should be noted that the above example is only one way of defining the fifth parameter, and the present disclosure does not limit the specific value of the fifth parameter.

In addition, the fifth parameter may be a parameter configured for the SBFD resource. For the non-SBFD resource, the quantity of SSBs correlated with each RO resource and the quantity of contention based preambles for each SSB on each valid RO resource may be defined based on a sixth parameter in the present disclosure. The values of the fifth parameter may be different from that of the sixth parameter. Since the definition of the parameter ssb-perRACH-OccasionAndCB-PreamblesPerSSB in the non-SBFD resource already exists in the related art, the present disclosure will not discuss it in details.

Furthermore, if the fifth parameter is not configured for the SBFD resource, then by default, the parameter ssb-perRACH-OccasionAndCB-PreamblesPerSSB configured for the non-SBFD resource can be used as the fifth parameter configured for the SBFD resource in the present disclosure.

In the example of the present disclosure, there are two cases for the correlation between RO resources and SSBs: 1. RO resources in the first UL resource and the second UL resource are correlated with the SSBs together; 2. the correlation of RO resources in the first UL resource with the SSBs is performed separately from the correlation of RO resources in the second UL resource with the SSBs.

For the two cases, there are two different ways, namely step C and step D, to correlate RO resources with SSBs. One of step C and step D is selected to implement block S902. The step C and step D will be described in the following, which will not be described in detail here.

In addition, it should be noted that in the example of the present disclosure, only the RO resource that is determined to be valid before executing the example shown in Figure 9 can be correlated with the SSB. Specifically, by default, all of RO resources can be valid. It is also possible to determine the validity of the RO resource based on at least one validity determination method described in the present disclosure, and then execute the example shown in Figure. 9 to correlate the valid RO resource with the SSB.

S903: for each RO resource, if the RO resource is correlated with none of the SSBs, determining that the RO resource is invalid.

Specifically, if the quantity of remaining uncorrelated RO resources is less than the target product, the remaining RO resources will be correlated with none of the SSBs. The RO resource correlated with non of the SSBs is invalid.

In one example of the present disclosure, the block S902 can be implemented through the following step C or step D.

Step C: in the preset correlation cycle, in a time domain order, correlating a foremost second quantity of the RO resources in a first UL resource and a second UL resource with the SSBs.

The second quantity is the target product, which is a product of the first quantity and the preset quantity of the RO resources correlated with each of the SSBs; the first UL resource is a resource located within an uplink subband in the SBFD symbol, and the second UL resource is a resource for transmitting uplink data in the non-SBFD symbol.

When the above block S902 is implemented by using step C, the RO resources in the first UL resource and the second UL resource are correlated with SSBs together. The RO resources correlated with the SSBs are the foremost second quantity of RO resources in all of RO resources included in the first UL resource and the second UL resource.

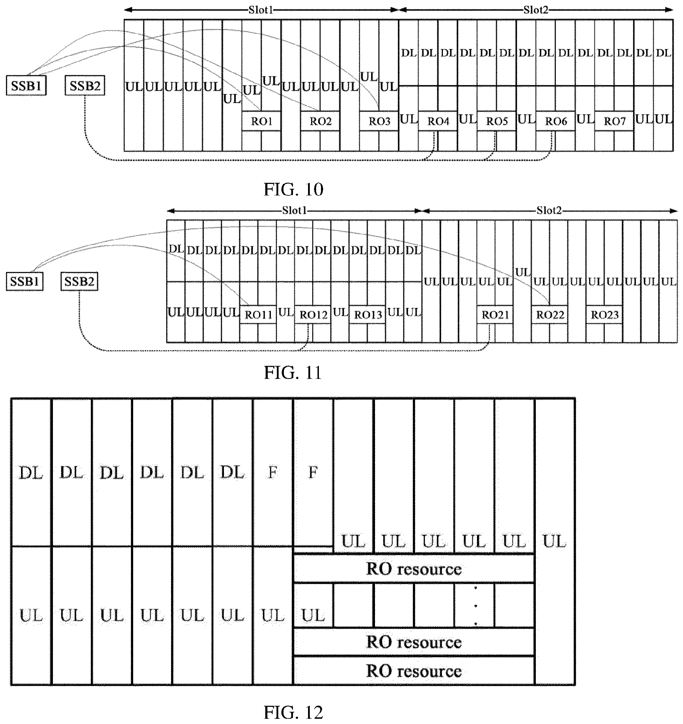

Refer to Figure 10, which is a schematic diagram of a first matching relationship between SSBs and RO resources provided by an example of the present disclosure.

Slot1 and Slot2 are included in the figure. Slot1 belongs to the second UL resource in the non-SBFD resource. Slot2 belongs to the SBFD resource, and the UL resource in the SBFD resource is the first UL resource. Therefore, RO1-RO3 in the figure belong to the second UL resource, and RO4-RO7 belong to the first UL resource. Two SSBs are includes in the figure, namely SSB1 and SSB2. The solid lines in the figure represent the correlation relationship between SSB1 and the RO resources, and it can be seen that SSB1 is correlated with RO1-RO3. The dotted lines in the figure represent the correlation relationship between SSB2 and the RO resources, and it can be seen that SSB2 is correlated with RO4-RO6. RO7 is correlated with none of the SSBs, and thus is invalid.

The preset quantity of RO resources correlated with each SSB is 3, the first quantity of SSBs is 2, and the target product is 6. Since the RO resources in the first UL resource and the second UL resource are correlated with the SSBs together, the first six RO resources are correlated with the SSBs.

It should be noted that the process of correlating the RO resources with the SSBs in step C is similar to the process in the related art of correlating RO resources in the non-SBFD resource with SSBs, and differs from the process in the related art only in that the RO resources in the first UL resource and the second UL resource are correlated with SSBs together in step C. However, there is no RO resource located in the first UL resource in the related art. Therefore, the similarities will not be described again in the present disclosure.

Step D: in the preset correlation cycle, in the time domain order, correlating a foremost third quantity of RO resources located in the first UL resource with the SSBs, and correlating a foremost fourth quantity of RO resources located in the second UL resource with the SSBs.

Each of the third quantity and the fourth quantity is the target product.

When one RO resource is correlated with multiple SSBs, each SSB is distinguished by the preamble.

When the block S902 is implemented by using step D, the correlation of RO resources in the first UL resource with the SSBs is performed separately from the correlation of RO resources in the second UL resource with the SSBs.

Refer to Figure 11, which is a schematic diagram of a second matching relationship between SSBs and RO resources provided by an example of the present disclosure.

Slot1 and Slot2 are included in the figure. Slot1 belongs to the SBFD resource, and the UL resource in the SBFD resource is the first UL resource. Slot2 belongs to the second UL resource in the non-SBFD resource. Therefore, RO11-RO13 in the figure belong to the first UL resource, and RO21-RO23 belong to the second UL resource. Two SSBs are included in the figure, namely SSB1 and SSB2. The solid lines in the figure represent the correlation relationship between the SSB1 and RO resources. It can be seen that the SSB1 is correlated with RO11 and RO22. The dotted lines in the figure represent the correlation relationship between the SSB2 and RO resources. It can be seen that the SSB2 is correlated with RO12 and RO21. RO13 and RO23 are correlated with none of the SSBs, and thus are invalid.

In the SBFD resource, the preset quantity of RO resources correlated with each SSB is 1, the first quantity of SSBs is 2, and the target product is 2. Therefore, there are two RO resources correlated with the SSBs in the first UL resource and two RO resources correlated with the SSBs in the second UL resource.

It should be noted that the process of correlating the RO resources with the SSBs in step D is similar to the process in the related art of correlating RO resources in the non-SBFD resource with SSBs, and differs from the process in the related art only in that correlation of the RO resources in the first UL resource is separately performed from the correlation of RO resources in the second UL resource in step D. However, there is no RO resource located in the first UL resource in the related art. Therefore, the similarities will not be described again in the present disclosure.

As can be seen from above, in the examples of the present disclosure, the validity of the SSBs is defined according to the correlation between RO resources and SSBs. Thus, the correlation between RO resources within the first UL resource in the SBFD resource and SSBs can be achieved. Furthermore, based on the correlation result, the validity of the RO resource can be determined.

In another example of the present disclosure, due to the new addition of the SBFD resource in the present disclosure, the RO resource may span an SBFD symbol belonging to the SBFD resource and a non-SBFD symbol belonging to the non-SBFD resource in the time domain. Therefore, the validity of the RO resource within the SBFD symbol and/ or non-SBFD symbol may be determined.

In one example of the present disclosure, for each RO resource correlated with the SSB, if the RO resource is located in the first UL resource or the RO resource is located in the second UL resource, the RO resource is valid. The first UL resource is a resource located within the uplink subband in the SBFD symbol, and the second UL resource is a resource for transmitting uplink data in the non-SBFD symbol.

Specifically, if the RO resource is located in the first UL resource, it indicates that the entire RO resource belongs to the first UL resource. If the RO resource is located in the second UL resource, it indicates that the entire RO resource belongs to the second UL resource. That is, if the RO resource does not span the SBFD resource and the non-SBFD resource, the RO resource is valid.

In another example of the present disclosure, for each first RO resource correlated with the SSB, if the first RO resource spans the first UL resource and the second UL resource, the first RO resource is valid.

In yet another example of the present disclosure, for each first RO resource correlated with the SSB, if the first RO resource spans the first UL resource and the second UL resource, the first RO resource is invalid.

The first RO resource spanning the first UL resource and the second UL resource indicates that part of the first RO resource is located in the first UL resource and the other part of the first RO resource is located in the second UL resource. Then, in one case, if the first RO resource is correlated with the SSB, then the first RO resource is valid as a whole; if the first RO resource is correlated with none of the SSBs, then the first RO resource is invalid. In another case, it is directly determined that the first RO resource is invalid without the need to determine whether the first RO resource is correlated with the SSB.

Specifically, the method of correlating the first RO resource with the SSB can be referred to the above, and will not be described again here.

Refer to Figure 12, which is a fifth schematic diagram of a RO resource distribution provided by an example of the present disclosure.

An SBFD resource and a non-SBFD resource are included in the figure. The UL resource in the SBFD resource in the figure is the first UL resource, and the entire non-SBFD resource in the figure is the second UL resource. The RO resource in the figure spans the SBFD resource and non-SBFD resource, and is located in the first UL resource and the second UL resource.

In another example of the present disclosure, for each first RO resource correlated with the SSB, if the first RO resource is located in a first non-UL resource and the second UL resource, a part of the first RO resource located in the second UL resource is valid.

In another example of the present disclosure, for each first RO resource correlated with the SSB, if the first RO resource is located in the first non-UL resource and the second UL resource, the first RO resource is invalid.

The first non-UL resource is a resource outside the uplink subband in the SBFD symbol, and the second UL resource is a resource for transmitting uplink data in the non-SBFD symbol.

For example, the first non-UL resource is a resource located in a downlink subband or a resource located in a guard band in the SBFD resource.

The first RO resource spanning the first non-UL resource and the second UL resource means that a part of the first RO resource is located in the first non-UL resource and the other part is located in the second UL resource. Since the RO resource should theoretically be located in the UL resource, the part of the first RO resource located in the first non-UL resource conflicts with the first non-UL resource. In this case, only a part of the first RO resource located in the second UL resource and correlated with the SSB, may be determined to be valid. Alternatively the first RO resource is determined to be invalid as a whole.

Specifically, the method of correlating the part of the first RO resource located in the second UL resource with the SSB can be referred to the above, and will not be described again here.

As can be seen from above, in the example of the present disclosure, the validity of SSB is defined according to the RO resource distribution in the time domain. The validity determination method for the RO resource being located only in the SBFD symbol, only in the non-SBFD symbol, or across the SBFD symbol and non-SBFD symbol in the time domain has been defined. This can solve the conflict problem of the RO resource in the time domain.

In another example of the present disclosure, since there may be overlap in time domain position between the first RO resource and the target resource of the downlink channel, that is, there is a time domain conflict between the first RO resource and the target resource, it is necessary to determine the validity of the first RO resource for the above conflict.

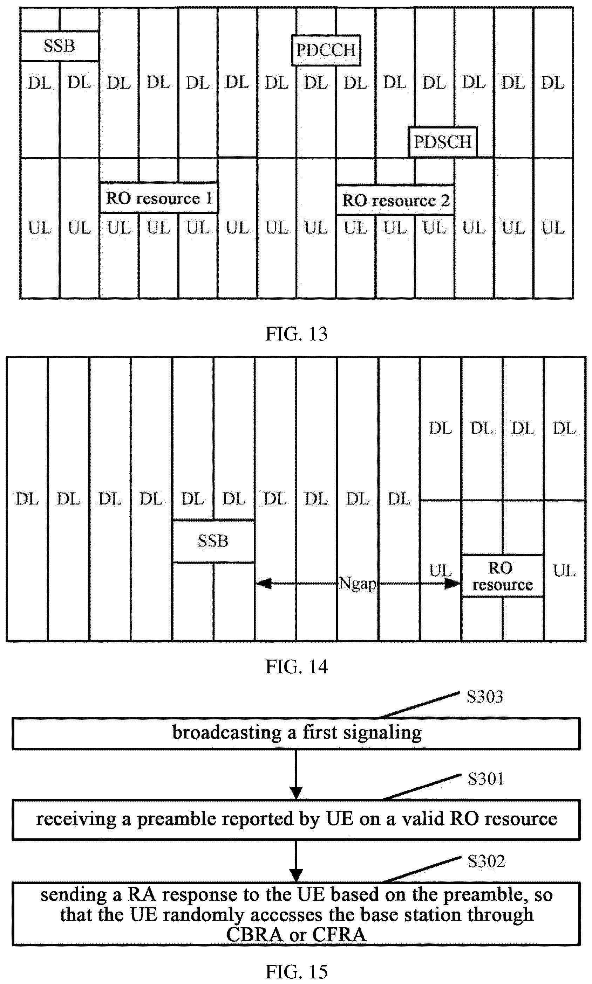

Refer to Figure 13, which is a sixth schematic diagram of a RO resource distribution provided by an example of the present disclosure.

In the figure, there are a RO resource 1 and a RO resource 2 located in the UL resource, and an SSB resource, a PDCCH resource and a PDSCH resources located in the DL resource.

The RO resource 2 overlaps with the PDCCH resource and the PDSCH resource in the time domain position.

When the UE supports full-duplex communication, the multiple first RO resources located within the uplink subband in the SBFD symbol are valid.

If the UE supports full-duplex communication, it means that the UE can both send and receive data at the same time. Therefore, even if the time domain position of the first RO resource overlaps with that of the target resource for transmitting downlink data in the downlink channel, the UE can still transmit data in different resources at the overlapped time domain position. Therefore, in this case, regardless of whether the time domain position of the first RO resource overlaps with that of the target resource, the first RO resource is directly determined to be valid.

When the UE supports half-duplex communication and does not support full-duplex communication, if the time domain position of a first RO resource located within the uplink subband in the SBFD symbol overlaps with that of the target resource for transmitting data in the downlink channel, then the first RO resource whose priority is higher than that of the target resource based on a preset priority order is valid.

Since the UE supports half-duplex communication but does not support full-duplex communication, the UE can only transmit uplink data or transmit downlink data at the same time. The first RO resource is used to transmit the uplink preamble. If the first RO resource overlaps with the target resource of the downlink channel in the time domain positon, then since the UE can only receive or send data at the same time, it cannot use both resources to transmit data simultaneously. Therefore, there will be a conflict between the first RO resource and the target resource, and the UE can only support one resource to be valid. In this case, the priority of the first RO resource and that of the target resource can be compared, and if the priority of the first RO resource is higher than that of the target resource, the first RO resource is valid; otherwise, the first RO resource is invalid.

Wherein, the above preset priority order from high to low is: a CD-SSB (Cell-Defining Synchronization Signal Block) resource and a non-CD SSB resource, a Type0 type of resource in a PDCCH resource, a first RO resource, resources other than the Type0 type of resource in the PDCCH resource, and a target resource other than the CD-SSB resource, non-CD SSB resource and PDCCH resource. When the preset priority order is the above order, the priority of the first RO resource is lower than that of the CD-SSB resource, non-CD SSB resource, and Type0 type of resource in the PDCCH resource, and higher than that of other target resources. That is to say, the first RO resource will be invalid only when the first RO resource overlaps with the CD-SSB resource, non-CD SSB resource, or Type0 type of resource in the PDCCH resource.

The above preset priority order is only for one case, which is not limited in the examples of the present disclosure and can be configured according to actual conditions.

As can be seen from above, in the examples of the present disclosure, when there is a conflict between the first RO resource and the target resource in the downlink channel in the time domain, in order to avoid the conflict between the first RO resource and the target resource, the validity of the first RO resource can be determined, thereby solving the problem of confliction between uplink resource and downlink resource.

In yet another example of the present disclosure, the first RO resource needs to be correlated with the SSB for preamble transmission. Therefore, the first RO resource and the SSB need to satisfy a necessary time domain position relationship to prevent a conflict between the first RO resource and the SSB resource. To this end, it is necessary to determine the validity of the first RO resource.

When the UE supports full-duplex communication, the UE can perform uplink data transmission and downlink data transmission simultaneously. In this case, there is no conflict between the SSB resource and the first RO resource, and therefore, all of first RO resources are valid.

When the UE supports half-duplex communication and does not support full-duplex communication, for each first RO resource, if the first time domain position of the first RO resource is located before the second time domain position of the SSB resource, the first RO resource is invalid.

When the UE supports half-duplex communication and does not support full-duplex communication, for each first RO resource, if the first time domain position of the first RO resource is located after the second time domain position of the SSB resource, and the time interval between the second time domain position and the first time domain position is less than a preset time interval, then the first RO resource is invalid.

Since the SSB resource is a downlink resource, if the UE wants to transmit the uplink preamble through the RO resource after transmitting the downlink SSB through the SSB resource, a handover between uplink and downlink channels is needed. Channel handover requires a preparation time, so there needs to be the preset time interval between the second time domain position of the SSB resource and the first time domain position of the first RO resource, so that the first RO resource can be used normally by the UE. Therefore, if the time interval between the second time domain position and the first time domain position is less than the preset time interval, the first RO resource is invalid.

Refer to Figure 14, which is a seventh schematic diagram of a RO resource distribution provided by an example of the present disclosure.

In the figure, there are the SSB resource and the RO resource. Ngap between the SSB resource and the RO resource is a time interval between the second time domain position and the first time domain position. If the time interval is not less than the preset time interval, the RO resource is valid.

In one example of the present disclosure, if a subcarrier spacing of the above preamble is 1.25 kHz or 5 kHz, the above preset time interval is 0 symbol;

if the subcarrier spacing of the above preamble is 15 kHz or 30 kHz or 60 kHz or 120 kHz, the above preset time interval is 2 symbols;

if the subcarrier spacing of the above preamble is 480 kHz, the above preset time interval is 8 symbols;

if the subcarrier spacing of the above preamble is 960 kHz, the above preset time interval is 16 symbols.

Specifically, refer to Table 1, which is a relationship table between the subcarrier spacing of the preamble and the preset time interval provided by the example of the present disclosure.

Table 1

**Table 1**

| Preamble SCS (Preamble Subcarrier Spacing) | Preset time interval |
|---|---|
| 1.25kHz or 5kHz | 0 |
| 15kHz or 30kHz or 60kHz or 120kHz | 2 |
| 480kHz | 8 |
| 960kHz | 16 |

In addition, the relationship between the subcarrier spacing of the preamble and the preset time interval shown in Table 1 is only an example, which is not limited in the present disclosure and can be configured according to actual needs.

As can be seen from above, in the examples of the present disclosure, for the UE that supports half-duplex communication but does not support full-duplex communication, the time interval between the SSB resource and the valid first RO resource is defined to ensure enough time for UE to configure communication after using the SSB resource, so as to complete the process of preamble reporting through the first RO resource.

In another example of the present disclosure, in the case of the PRACH (Physical Random Access Channel) repeatedly transmitting (PRACH repetition) the preamble, the UE can report the preamble to the base station through the RO resource multiple times in a short time, to improve the success rate of the preamble reporting. To this end, all of RO resources need to be divided into multiple RO resource groups, where each RO resource group consists of multiple RO resources, and the RO resources in one RO resource group are continuous in time, use the same frequency domain resource, and are correlated with the same one or more SSB, and each SSB is correlated with the same preamble in all of valid RO resources in the RO resource group. The UE reports the preamble through each RO resource in the same RO resource group, thereby achieving multiple reports of the preamble. In addition, the RO resources in the present disclosure may be included in the SBFD resource, so the grouping method for the RO resources is different from the grouping method for the RO resources only in the non-SBFD resource in the related art. Further, some RO resources may not be divided into a RO resource group. It is necessary to determine the validity of the RO resource based on the division of the RO resource into a RO resource group.

In one example of the present disclosure, when the UE performs PRACH repetition for the preamble, all of the RO resources will be divided into multiple RO resource groups, and the RO resources that are not divided into the RO resource groups are invalid.

A RO resource group is a set of RO resources with an adjacent arrangement order, and the arrangement order of the RO resources is incremented according to the frequency domain positions of the RO resources from low to high and the time domain positions of the same from front to back.

Specifically, for the case of PRACH repetition for the preamble, a repetition time period starting from frame 0 is an integer multiple of the correlation cycle between SSBs and RO resources, and the RO resource groups are repeated in the repetition time period. In one repetition time period, N RO resource groups are included. A first valid RO resource is a first valid RO resource of the first RO resource group. A first RO resource in each subsequent RO resource group is determined according to the arrangement order of the RO resources.

In one example of the present disclosure, the RO resource groups are obtained by grouping the RO resources in SBFD symbol, or by grouping the RO resources in SBFD symbol and non-SBFD symbol, or by grouping the RO resources in non-SBFD symbol.

In one example of the present disclosure, the PRACH repetition for the preamble performs grouped transmission on the RO resources in the SBFD symbol and on the RO resources in the non-SBFD symbols. In this case, when the RO resources are grouped, the RO resources in the SBFD symbol and the non-SBFD symbols are grouped together.

Then, the RO resource groups are obtained by grouping the RO resources in the SBFD symbols and the non-SBFD symbols.

In another example of the present disclosure, the PRACH repetition for the preamble performs grouped transmission only on the RO resources in the SBFD symbol. In this case, when the RO resources are grouped, only the RO resources in the SBFD symbol are grouped.

Then, the RO resource groups are obtained by grouping the RO resources in the SBFD symbol.

Alternatively, in yet another example of the present disclosure, the PRACH repetition for the preamble performs grouped transmission only on the RO resources in the non-SBFD symbol. In this case, when the RO resources are grouped, only the RO resources in the non-SBFD symbol are grouped.

In an example of the present disclosure, only valid RO resources may be grouped. Specifically, the valid RO resources may be obtained by determining the validity of the RO resources using other RO resource validity determination methods described in the present disclosure.

For specific operations of the method for controlling the grouping of the RO resources, please refer to block S303 shown in Figure 15 below.

Refer to Figure 15, which is a schematic flow of a second random access method provided by an example of the present disclosure. Compared with the example shown in Figure. 3, the method further includes the following block S303 before block S301.

S303: broadcasting a first signaling.

The first signaling includes a first parameter. When the value of the first parameter is a first value, the first parameter indicates that the RO resource groups are obtained by grouping the RO resources in the SBFD symbol. When the value of the first parameter is a second value, the first parameter indicates that the RO resource groups are obtained by grouping the RO resources in the SBFD symbol and the non-SBFD symbol. When the value of the first parameter is a third value, the first parameter indicate that the RO resource groups are obtained by grouping the RO resources in the non-SBFD symbol.

Specifically, the above first signaling may be referred to as msg1-Repetitionenable (repeatable message 1) indication signaling, and the first parameter included in the msg1-Repetitionenable indication signaling may be referred to as msg1-Repetitionenable parameter. In an example, the first value is 1, and the msg1-Repetitionenable parameter with a value of 1 indicates that the RO resource groups are obtained by grouping RO resources in the SBFD symbol. That is, PRACH repetition only performs grouped transmission on RO resources in the SBFD symbol. The second value is 0, and the msg1-Repetitionenable parameter with a value of 0 indicates that the RO resource groups are obtained by grouping RO resources in the SBFD symbol and the non-SBFD symbol. That is, PRACH repetition performs grouped transmission on RO resources in the SBFD symbol and in the non-SBFD symbol. The third value is 2, and the msg1-Repetitionenable parameter with a value of 2 indicates that the RO resource groups are obtained by grouping RO resources in the non-SBFD symbol. That is, PRACH repetition performs grouped transmission on RO resources in the non-SBFD symbol.

The above first signaling, the name of the first parameter, and the specific value of the first parameter are just an example, which are not limited in examples of the present disclosure.

In addition, if the above first parameter does not exist, then, by default, the RO resource groups are obtained by grouping the RO resources in the SBFD symbol.

In addition, in one example of the present disclosure, there is no RO resource subgroup between two RO resource groups, that is, the first RO resource in the latter RO resource group is a first RO resource after the last RO resource in the previous RO resource group.

Alternatively, there is a spacing between RO resource groups, that is, there is a spacing between the first RO resource in the latter RO resource group among two RO resource groups and the last RO resource in the previous RO resource group among the two RO resource groups. Specifically, the above spacing between the RO resource groups refers to a spacing between two RO resource groups with the smallest difference in time domain positions.

In this case, the above first signaling further includes a second parameter. The second parameter represents the quantity of RO resource subgroups between RO resource groups. A RO resource subgroup is a set of RO resources at the same time domain position.

In one example of the present disclosure, when the RO resource groups are obtained by grouping RO resources in the SBFD symbol, the second parameter is the quantity of RO resource subgroups in the SBFD symbol between RO resource groups.

In another example of the present disclosure, when the RO resource groups are obtained by grouping RO resources in the SBFD symbol and non-SBFD symbol, the second parameter is the quantity of RO resource subgroups in the SBFD symbol and non-SBFD symbol between RO resource groups ;

In yet another example of the present disclosure, when the RO resource groups are obtained by grouping RO resources in the non-SBFD symbol, the second parameter is the quantity of the RO resource subgroups in the non-SBFD symbol between RO resource groups.

If the second parameter exists, it indicates that there is a RO resource subgroup between the RO resource groups. If the second parameter does not exist, then by default, there is no RO resource subgroup between the RO resource groups.

In the case that the RO resource groups are obtained by grouping RO resources in the SBFD symbol and the non-SBFD symbol, the second parameter may be referred to as msg1-RepetitionTimeOffsetROGroup (message 1-repetition time offset RO resource group).

In the case that the RO resource groups are obtained by grouping RO resources in the SBFD symbol, the second parameter may be referred to as msg1-RepetitionTimeOffsetROGroupforSBFDonly (message 1-repetition time offset RO resource group related to only SBFD).

In the case that the RO resource groups are obtained by grouping RO resources in non-SBFD symbols, the second parameter may be referred to as msg1-RepetitionTimeOffsetROGroupfornonSBFDonly (message 1- repetition time offset RO resource group related to only non-SBFD).

In another example of the present disclosure, the value of the second parameter is defined as follows:

when the number of PRACH repetitions is 8, a value of the second parameter is 16;

when the number of PRACH repetitions is 4, the value of the second parameter is 8 or 16;

when the number of PRACH repetitions is 2, the value of the second parameter is 4, 8 or 16.

The name of the second parameter and the value of the second parameter are only examples, which can be adjusted based on actual needs.

Based on the above description, there are four different cases in the examples of the present disclosure.

In a first case, the RO resource groups are obtained by grouping RO resources in the SBFD symbol and the non-SBFD symbol, and there is RO resource subgroup between the RO resource groups.

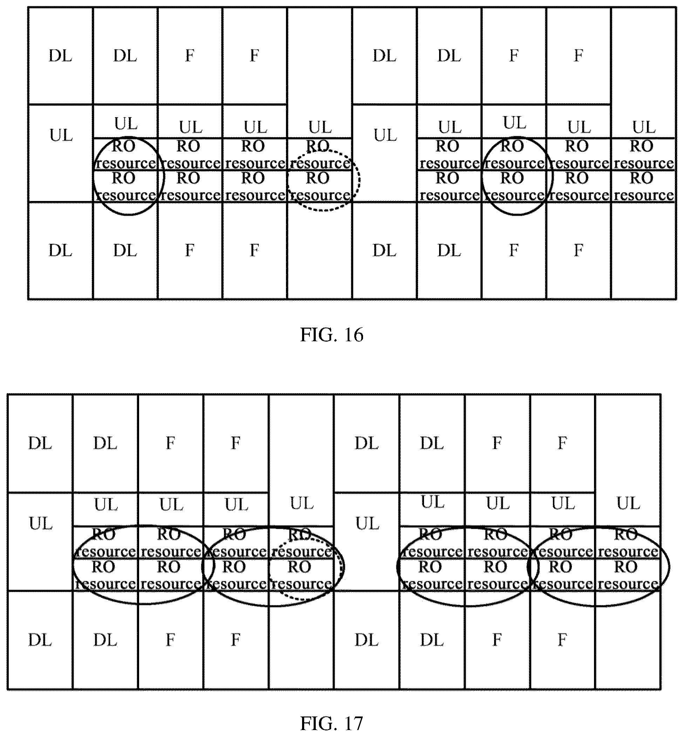

In this case, refer to Figure. 16, which is a first schematic diagram of RO resource group provided by an example of the present disclosure.

In the figure, the horizontal direction represents the time domain, and the vertical direction represents the frequency domain. Every two adjacent RO resources in the figure form one RO resource subgroup. For example, the RO resources framed by a dotted block in the figure form one RO resource subgroup. In the figure, there are an SBFD symbol and a non-SBFD symbol, and the RO resource groups are obtained by grouping the RO resources in the SBFD symbol and non-SBFD symbol. The RO resource groups are framed by the solid oval blocks in the figure, namely RO resource group 1 on the left and RO resource group 2 on the right. The value of the second parameter is 4, indicating that there are 4 RO resource subgroups between 2 RO resource groups.

In a second case, the RO resource groups are obtained by grouping RO resources in the SBFD symbol and the non-SBFD symbol, and there is no RO resource subgroup between the RO resource groups.

In this case, refer to Figure 17, which is a second schematic diagram of RO resource group provided by an example of the present disclosure.

In the figure, the horizontal direction represents the time domain, and the vertical direction represents the frequency domain. Every two adjacent RO resources in the figure form one RO resource subgroup. For example, the RO resources framed by the dotted block in the figure form one RO resource subgroup. In the figure, there are an SBFD symbol and a non-SBFD symbol, and the RO resource groups are obtained by grouping the RO resources in the SBFD symbol and the non-SBFD symbol. The RO resource groups are framed by the solid oval blocks in the figure, and there are 4 RO resource groups, namely RO resource group 1 to RO resource group 4 from left to right. There is no spacing between adjacent RO resource groups. All of RO resources are divided into RO resource groups.

In a third case, the RO resource groups are obtained by grouping RO resources in the SBFD symbol, and there is RO resource subgroup between the RO resource groups.

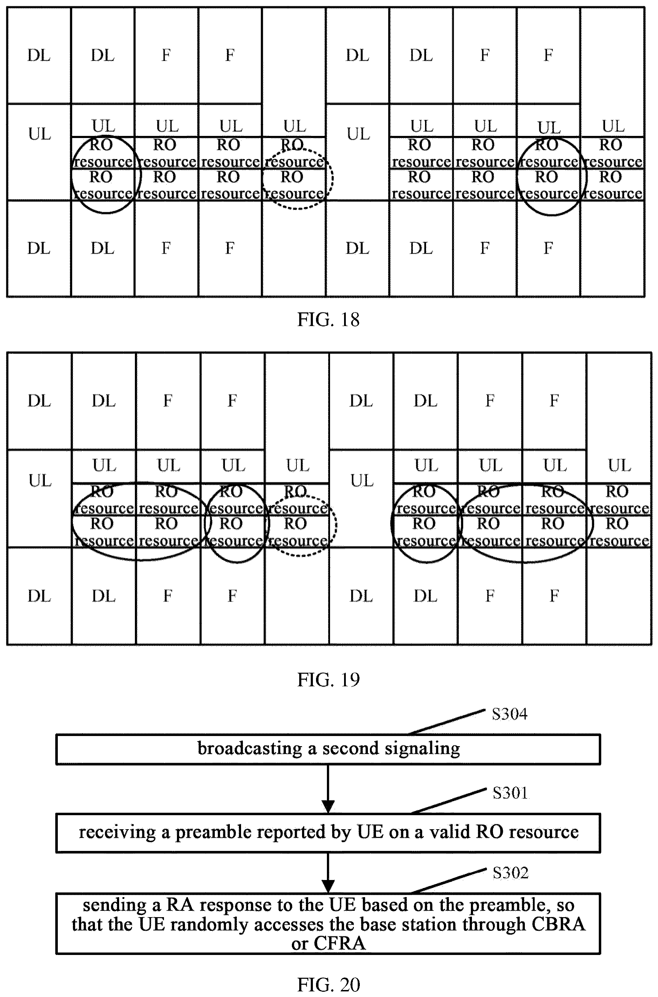

In this case, refer to Figure 18, which is a third schematic diagram of RO resource group provided by an example of the present disclosure.

In the figure, the horizontal direction represents the time domain, and the vertical direction represents the frequency domain. Every two adjacent RO resources in the figure form one RO resource subgroup. For example, the RO resources framed by the dotted block in the figure form one RO resource subgroup. In the figure, there are an SBFD symbol and a non-SBFD symbol, and the RO resource groups are obtained by grouping the RO resources in the SBFD symbol. The RO resource groups are framed by the solid oval blocks in the figure, namely RO resource group 1 on the left and RO resource group 2 on the right. The value of the second parameter is 4, indicating that there are 4 RO resource subgroups located in the SBFD symbol between the RO resource groups. Since in the case shown in Figure 18, the RO resource groups are obtained by grouping the RO resources in the SBFD symbol, the RO resource subgroup in the non-SBFD symbol is not included when counting the spacing between the RO resource groups. Therefore, although there are 5 RO resource subgroups between two adjacent RO resource groups in the figure, the value of the second parameter is 4 because one of the RO resource subgroups is located in the non-SBFD symbol.

In a fourth case, the RO resource groups are obtained by grouping the RO resources in the SBFD symbol, and there is no RO resource subgroup between the RO resource groups.

In this case, refer to Figure 19, which is a fourth schematic diagram of RO resource group provided by an example of the present disclosure.

In the figure, the horizontal direction represents the time domain, and the vertical direction represents the frequency domain. Every two adjacent RO resources in the figure form one RO resource subgroup. For example, the RO resources framed by the dotted block in the figure form one RO resource subgroup. In the figure, there are an SBFD symbol and a non-SBFD symbol, and the RO resource groups are obtained by grouping the RO resources in the SBFD symbol. The RO resource groups are framed by the solid oval blocks in the figure, where the two parts framed by two oval blocks in the middle together form one RO resource group, and each of an oval block on the left and an oval block on the right frames one RO resource group. There are three RO resource groups in the figure, namely RO resource group 1 to RO resource group 3 from left to right. There is no RO resource subgroup between the RO resource groups. Since in the case shown in Figure 18, the RO resource groups are obtained by grouping the RO resources in the SBFD symbol, the RO resources in the non-SBFD symbols are not considered when grouping, thus the RO resources in the non-SBFD symbol in the figure are not divided into the RO resource groups.

For another case, the RO resource groups are obtained by grouping RO resources in the non-SBFD symbol, and the resulting RO resource groups only include RO resources in the non-SBFD symbol, which is opposite to the RO resource groups shown in Figure 18 and Figure 19. There would be no example given for this case in examples of the present disclosure.

As can be seen from above, in a case of the PRACH repetition, the examples of the present disclosure can group the RO resources in the SBFD symbol, or group the RO resources in the SBFD symbol and non-SBFD symbol, thereby obtaining the RO resource groups, and performing the PRACH repetition. Further, after grouping in the above manner, a RO resource in the RO resource groups can be determined as a valid RO resource.

In yet another example of the present disclosure, refer to Figure 20, which is a schematic flow of a third random access method provided by an example of the present disclosure. Compared with the aforementioned example shown in Figure 3, the method further includes the following block S304.

S304: broadcasting a second signaling.

The second signaling includes a third parameter and/ or a fourth parameter. The third parameter indicates the frequency domain positions of the multiple first RO resources, and the fourth parameter indicates the number of first RO resources at the same time domain position. The second signaling may be SIB1 (System Information Block 1) or other dedicated signaling. The dedicated signaling may be used to configure the CFRA for the RO resources and the preamble.

Since the third parameter may indicate the frequency domain positions of the first RO resources, and the fourth parameter may indicate the number of first RO resources at the same time domain position, the UE may determine the specific frequency domain position of a pre-configured first RO resource based on the third parameter and/or the fourth parameter.

In one example of the present disclosure, the third parameter indicates a frequency difference between a starting frequency of a first RO resource with the lowest frequency and a starting frequency of a RB where the first RO resource is located.

Specifically, the value of the third parameter may be the frequency difference between the starting frequency of the first RO resource with the lowest frequency and the starting frequency of the RB (Resource Block) where the first RO resource is located.

The value of the third parameter may also be a frequency difference between the starting frequency of the first RO resource with the lowest frequency and a starting frequency of a RO resource with the lowest frequency in the non-SBFD resource. In related technology, SIB1 carries a sixth parameter. The sixth parameter indicates the frequency difference between the starting frequency of the RO resource with the lowest frequency in the non-SBFD resource and the starting frequency of the RB where the RO resource is located. Therefore, by adding the third parameter and the sixth parameter, the frequency difference between the starting frequency of the first RO resource with the lowest frequency and the starting frequency of the RB where the first RO resource is located can be obtained. The sixth parameter may be an Msg1-Frequency Start1 (Message 1-Starting Frequency 1) parameter carried in SIB1 in the related art.

In addition, the third parameter may be referred to as Msg1-Frequency Start2 (Message 1-Starting Frequency 2) parameter, and the fourth parameter may be referred to as Msg1-FDM (SBFD) (Message 1-Frequency Division Multiplexing (Sub-band full duplex)). The fourth parameter is multiplied by the frequency of each first RO resource to obtain a total frequency of the first RO resources at the same time domain position. The sum of the total frequency and the third parameter is an ending frequency of the first RO resource with the highest frequency. Based on this, a frequency domain range of the first RO resources can be determined.

The frequency domain of each first RO resource may be referred to as PUSCH RBs for RA (Physical Uplink Shared Channel Resource Block for Random Access).

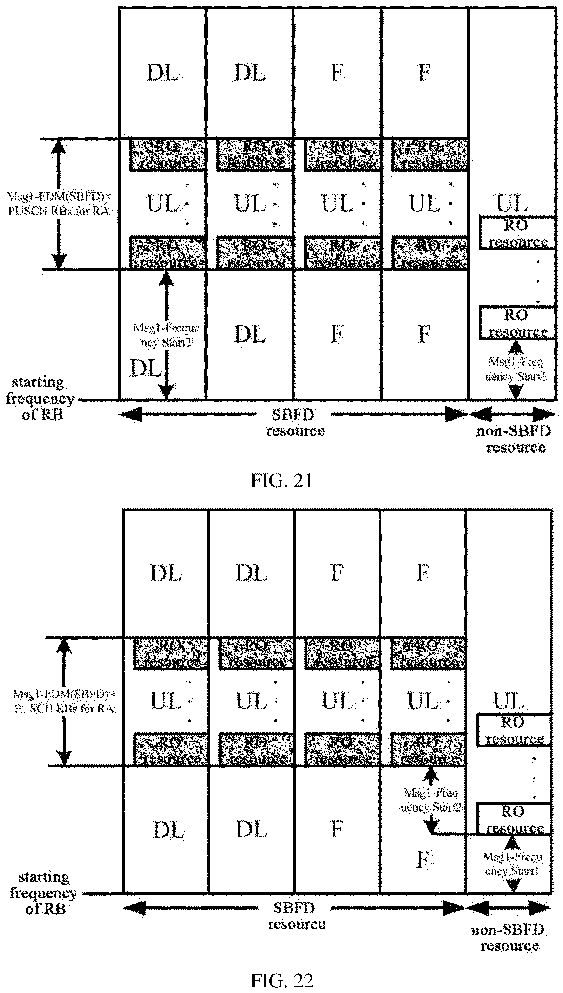

Refer to Figure 21, which is an eighth schematic diagram of RO resource distribution provided by an example of the present disclosure.

Based on the RO resource distribution shown in Figure 4, in Figure 21, there are an Msg1-Frequency Start1 parameter, an Msg1-Frequency Start2 parameter, Msg1-FDM(SBFD)×PUSCH RBs for RA, and a starting frequency of RB. In this case, the Msg1-Frequency Start2 parameter is the frequency difference between the starting frequency of the first RO resource with the lowest frequency and the starting frequency of the RB where the first RO resource is located.

Refer to Figure 22, which is a ninth schematic diagram of RO resource distribution provided by an example of the present disclosure.

Based on the RO resource distribution shown in Figure 4, in Figure 22, there are an Msg1-Frequency Start1 parameter, an Msg1-Frequency Start2 parameter, Msg1-FDM(SBFD)×PUSCH RBs for RA, and a starting frequency of RB. In this case, the Msg1-Frequency Start2 parameter is the frequency difference between the starting frequency of the first RO resource with the lowest frequency and the starting frequency of the RO resource with the lowest frequency in the non-SBFD resource.

Corresponding to the aforementioned random access method applied to a base station, examples of the present disclosure further provide a random access method applied to UE.

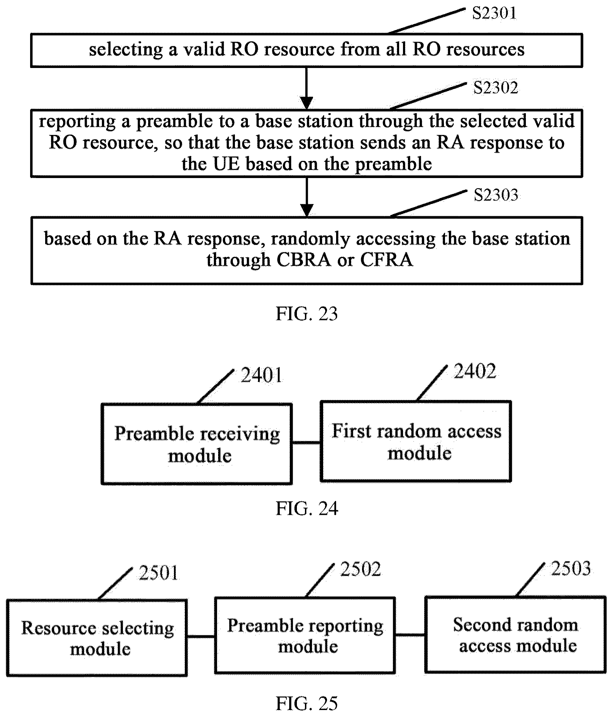

Refer to Figure 23, which is a schematic flow of a fourth random access method provided by an example of the present disclosure, which is applied to UE. The method includes the following blocks S2301-S2303.

S2301: selecting a valid RO resource from all of RO resources.

All of the RO resources include multiple first RO resources overlapping with an SBFD resource.

S2302: reporting a preamble to a base station through the selected valid RO resource, so that the base station sends an RA response to the UE based on the preamble.

S2303: based on the RA response, randomly accessing the base station through CBRA or CFRA.

As can be seen from above, in the solutions provided by the examples of the present disclosure, all of the RO resources include multiple first RO resources overlapping with an SBFD resource. Therefore, when selecting a RO resource for preamble reporting, the UE can select a first RO resource. Since the SBFD resource is a full-duplex resource, that is, the UE can perform uplink data transmission and downlink data transmission simultaneously, thereby introduction of the SBFD resource can increase the amount of UL resources. On this basis, since the UE can report the preamble through the first RO resource overlapping with the SBFD resource, it is equivalent to increasing the UL resources that can be used by the UE when reporting the preamble, thereby reducing uplink access delay of the UE, further improving an user experience at the UE to meet the performance requirements for service continuity.

In one example of the present disclosure, for each RO resource, if the frequency domain position of the RO resource exceeds the uplink subband and/or uplink bandwidth part BWP used by the above UE, the RO resource is invalid.

In another example of the present disclosure, for each RO resource, if the RO resource is located within an SBFD symbol and overlaps with the downlink time domain resource or the flexible time domain resource, then the RO resource is valid, or the part of the RO resource that is located within the SBFD symbol and within the uplink BWP used by the UE is valid. The above downlink time domain resource includes a downlink time slot and a downlink symbol, and the above flexible time domain resource includes a flexible time slot and a flexible symbol.

In yet another example of the present disclosure, for each RO resource, if the frequency domain position of the RO resource exceeds the uplink subband and/or uplink BWP used by the UE, the RO resource is valid.

In one example of the present disclosure, when the selected valid RO resource is a part of the RO resource located within the SBFD symbol and within the uplink BWP, the preamble is reported to the base station through step E.

Step E: reporting the preamble to the base station according to a target subcarrier spacing through the selected valid RO resource.

The above target subcarrier spacing is a preset subcarrier spacing or a minimum subcarrier spacing or a maximum subcarrier spacing that matches the quantity of RBs.

As can be seen from above, in the examples of the present disclosure, when the configured RO resource exceeds the uplink subband and/ or uplink BWP used by the UE, and when the configured RO resource exceeds the UL resource in the SBFD resource, the validity of the RO resource is defined. Thus, the conflict between the RO resource and the frequency domain resources other than the uplink subband and/ or uplink BWP can be resolved, and the conflict between the RO resource and other resources other than the UL resource can be resolved.

In one example of the present disclosure, the above method further includes the following steps F to H.

Step F: obtaining a first quantity of configured SSBs;

In one example of the present disclosure, the UE can determine the first quantity of the SSBs from the value of ssb-PositionsInBurst (the position of the SSB in a burst set) in SIB1 or ServingCellConfigCommon (serving cell common configuration) broadcast by the base station.

Step G: in a preset correlation cycle, correlating RO resources with the SSBs in a time domain order according to the first quantity;

Step H: for each RO resource, if the RO resource is correlated with none of the SSBs, it is determined that the RO resource is invalid.

In one example of the present disclosure, the above step G can be implemented through the following step I or step J.

Step I: in the preset correlation cycle, in the time domain order, correlating a foremost second quantity of RO resources in a first UL resource and a second UL resource with the SSBs, wherein, the second quantity is a target product which is a product of the first quantity and a preset quantity of RO resources correlated with each of the SSBs, the first UL resource is a resource located within an uplink subband in the SBFD symbol, and the second UL resource is a resource for transmitting uplink data in the non-SBFD symbol.

Step J: in the preset correlation cycle, in the time domain order, correlating a foremost third quantity of RO resources in the first UL resource with the SSBs, and correlating a foremost fourth quantity of RO resources in the second UL resource with the SSBs, wherein, each of the third quantity and the fourth quantity is the target product.

As can be seen from above, in the examples of the present disclosure, the validity of the SSBs is defined according to the correlation between the RO resources and the SSBs. Thus, the correlation between the RO resources within the first UL resource in the SBFD resource and the SSBs can be achieved. Furthermore, based on the correlation result, the validity of the RO resource can be determined.

In one example of the present disclosure, for each RO resource correlated with the SSB, if the RO resource is located in the first UL resource or the RO resource is located in the second UL resource, the RO resource is valid; wherein the first UL resource is a resource located within the uplink subband in the SBFD symbol, and the second UL resource is a resource for transmitting uplink data in the non-SBFD symbol.

In another example of the present disclosure, for each first RO resource correlated with the SSB, if the first RO resource spans the first UL resource and the second UL resource, the first RO resource is valid; wherein, the first UL resource is a resource located within the uplink subband in the SBFD symbol, and the second UL resource is a resource for transmitting uplink data in the non-SBFD symbol.

In another example of the present disclosure, for each first RO resource correlated with the SSB, if the first RO resource spans the first UL resource and the second UL resource, the first RO resource is invalid; wherein, the first UL resource is a resource located within the uplink subband in the SBFD symbol, and the second UL resource is a resource for transmitting uplink data in the non-SBFD symbol.

In one example of the present disclosure, for each first RO resource correlated with the SSB, if the first RO resource is located in the first non-UL resource and the second UL resource, the part of the first RO resource located in the second UL resource is valid;

wherein, the first non-UL resource is a resource outside the uplink subband in the SBFD symbol, and the second UL resource is a resource for transmitting uplink data in the non-SBFD symbol.

In another example of the present disclosure, for each first RO resource correlated with the SSB, if the first RO resource is located in the first non-UL resource and the second UL resource, the first RO resource is invalid;

wherein, the first non-UL resource is a resource outside the uplink subband in the SBFD symbol, and the second UL resource is a resource for transmitting uplink data in the non-SBFD symbol.

As can be seen from above, in the examples of the present disclosure, the validity of SSB is defined according to the distribution of RO resources in the time domain. The validity determination method for the RO resource being located only in the SBFD symbol, only in the non-SBFD symbol, or across the SBFD symbol and non-SBFD symbol in the time domain has been defined. This can solve the conflict problem of the RO resource in the time domain.

In one example of the present disclosure, when the UE supports full-duplex communication, the multiple first RO resources located within the uplink subband of the SBFD symbol are valid;

when the UE supports half-duplex communication but does not support full-duplex communication, if the time domain position of a first RO resource located within the uplink subband in the SBFD symbol overlaps with that of the target resource for transmitting data in the downlink channel, then the first RO resource whose priority is higher than that of the target resource based on a preset priority order is valid.

In one example of the present disclosure, the preset priority order is: the cell-defining CD-SSB resource and the non-CD SSB resource, the Type0 type of resource in the physical downlink control channel PDCCH resource, the first RO resource, resources other than the Type0 type of resources in the PDCCH resource, and the target resource other than the CD-SSB resource, non-CD SSB resource and PDCCH resource.

As can be seen from above, in the examples of the present disclosure, when there is a conflict between the first RO resource and the target resource in the downlink channel in the time domain, in order to avoid the conflict between the first RO resource and the target resource, the validity of the first RO resource can be determined, thereby solving the problem of confliction between uplink and downlink resource.

In one example of the present disclosure, when the UE supports half-duplex communication and does not support full-duplex communication, for each first RO resource, if a first time domain position of the first RO resource is located before a second time domain position of the SSB resource, the first RO resource is invalid;

and/ or

for each first RO resource, if the first time domain position of the first RO resource is located after the second time domain position of the SSB resource, and a time interval between the second time domain position and the first time domain position is less than a preset time interval, then the first RO resource is invalid.

In one example of the present disclosure, if a subcarrier spacing of the preamble is 1.25 kHz or 5 kHz, the preset time interval is 0 symbol;

if the subcarrier spacing of the preamble is 15 kHz or 30 kHz or 60 kHz or 120 kHz, the preset time interval is 2 symbols;

if the subcarrier spacing of the preamble is 480 kHz, the preset time interval is 8 symbols;

if the subcarrier spacing of the preamble is 960 kHz, the preset time interval is 16 symbols.

As can be seen from above, in the examples of the present disclosure, for the UE that supports half-duplex communication but does not support full-duplex communication, the time interval between the SSB resource and the valid first RO resource is defined to ensure enough time for the UE to configure communication after using the SSB resource, to complete the process of preamble reporting through the first RO resource.

In one example of the present disclosure, in the case that the UE performs the Physical Random Access Channel PRACH repetition for the preamble, all of the RO resources will be divided into multiple RO resource groups, and the RO resources that are not divided into the RO resource groups are invalid, wherein a RO resource group is a set of RO resources with an adjacent arrangement order, and the arrangement order of the RO resources is incremented according to the frequency domain position of the RO resources from low to high and the time domain position of the same from front to back.

In one example of the present disclosure, the RO resource groups are obtained by grouping the RO resources in the SBFD symbol, or by grouping the RO resources in the SBFD symbol and non-SBFD symbol, or by grouping the RO resources in the non-SBFD symbol.

In one example of the present disclosure, before block S2301, the method further includes the following step K.

Step K: receiving a first signaling broadcast by the base station.

The first signaling includes a first parameter. When the value of the first parameter is a first value, the first parameter indicates that the RO resource groups are obtained by grouping the RO resources in the SBFD symbol. When the value of the first parameter is a second value, the first parameter indicates that the RO resource groups are obtained by grouping the RO resources in the SBFD symbol and the non-SBFD symbol. When the value of the first parameter is a third value, the first parameter indicate that the RO resource groups are obtained by grouping the RO resources in the non-SBFD symbol.

In one example of the present disclosure, the first signaling further includes a second parameter which indicates the quantity of RO resource subgroups between RO resource groups, and a RO resource subgroup is a set of RO resources at the same time domain position.

In one example of the present disclosure, when the RO resource groups are obtained by grouping RO resources in the SBFD symbol, the second parameter is the quantity of RO resource subgroups in the SBFD symbol between the RO resource groups;

when the RO resource groups are obtained by grouping RO resources in the SBFD symbol and non-SBFD symbol, the second parameter is the quantity of RO resource subgroups in the SBFD symbol and non-SBFD symbol between the RO resource groups;

when the RO resource groups are obtained by grouping RO resources in the non-SBFD symbol, the second parameter is the quantity of RO resource subgroups in the non-SBFD symbol between the RO resource groups.

In one example of the present disclosure, when the number of PRACH repetitions is 8, a value of the second parameter is 16;

when the number of PRACH repetitions is 4, the value of the second parameter is 8 or 16;

when the number of PRACH repetitions is 2, the value of the second parameter is 4, 8 or 16.

As can be seen from above, in a case of the PRACH repetition, the examples of the present disclosure can group the RO resources in the SBFD symbol, or group the RO resources in the SBFD symbol and non-SBFD symbol, thereby obtaining the RO resource groups, and performing the PRACH repetition. Further, after grouping in the above manner, RO resources in the RO resource groups can be determined as valid RO resources.

In one example of the present disclosure, the method further includes the following step L.

Step L: receiving a second signaling broadcast by the base station;

The second signaling includes a third parameter and/or a fourth parameter. The third parameter indicates the frequency domain positions of the multiple first RO resources, and the fourth parameter indicates the number of first RO resources at the same time domain position.

In one example of the present disclosure, the third parameter indicates the frequency difference between the starting frequency of the first RO resource with the lowest frequency and the starting frequency of the RB where the first RO resource is located.

In one example of the present disclosure, when the random access process for the UE is initiated by a PDCCH command, a time difference between a time when the UE receives the PDCCH command and a time when the UE reports the preamble is greater than or equal to a target time difference, wherein, the target time difference is calculated based on a preparation time of the UE for PUSCH, BWP switching time, channel delay, and switching time between uplink carriers.

Since after receiving the PDCCH command, the UE needs to make preparations for PUSCH, perform BWP handover, and uplink carriers handover before reporting the preamble, the time difference between the time when the UE reports the preamble and the time when the UE receives the PDCCH command should not be too small. Further, in the case of considering the channel delay, the preparation time of the UE for PUSCH, BWP switching time, channel delay, and switching time between uplink carriers need to be considered when calculating the target time difference. The time difference between the time when the UE receives the PDCCH command and the time when the UE reports the preamble needs to be greater than or equal to the target time difference, so that the UE is able to report the preamble after receiving the PDCCH command.

The target time difference may be a weighted sum of the preparation time of the UE for PUSCH, BWP switching time, channel delay, and switching time between uplink carriers, and the weight of each piece of data may be set by the user.

In another example of the present disclosure, the target time difference is calculated based on the following formula:

$$T = N_{T,2} + \Delta_{BWPSwitching} + \Delta_{Delay} + T_{switch}$$

wherein, T is the target time difference, $N_{T,2}$ is the preparation time of the UE for PUSCH, $\Delta_{BWPSwitching}$ is the BWP

switching time, $\Delta_{Delay}$ is the channel delay, and $T_{switch}$ is the switching time between uplink carriers.

That is, the target time difference is a sum of the preparation time of the UE for PUSCH, BWP switching time, channel delay, and switching time between uplink carriers.

Specifically, if the uplink BWP does not change, then $\Delta_{BWPSwitching}=0$; for the FR1 (Frequency Range 1) band, $\Delta_{Delay}=0.5$ milliseconds; for FR2 (Frequency Range 2) band, $\Delta_{Delay}=0.25$ msec.

As can be seen from above, in the examples of the present disclosure, the time difference between the time when the UE receives the PDCCH command and the time when the UE reports the preamble is defined, so as to ensure that the time when the UE reports the preamble matches the communication capability of the UE.

Corresponding to the aforementioned random access method applied to the base station, examples of the present disclosure further provide a random access apparatus applied to the base station.

Refer to Figure 24, which is a schematic structural diagram of a random access apparatus applied to a base station provided by an example of the present disclosure. The apparatus includes:

a preamble receiving module 2401, to receive a preamble reported by UE on a valid physical random access channel occasion RO resource, wherein the valid RO resource is selected by the UE from all of RO resources, and there is a first RO resource overlapping with a sub-band full duplex SBFD resource in all of the RO resources;

a first random access module 2402, to send a random access RA response to the UE based on the RA response, so that the UE randomly accesses the base station through contention based random access CBRA or through non contention or contention free random access CFRA.

As can be seen from above, in the solutions provided by the examples of the present disclosure, all of the RO resources include multiple first RO resources overlapping with an SBFD resource. Therefore, when selecting a RO resource for preamble reporting, the UE can select a first RO resource. Since the SBFD resource is a full-duplex resource, that is, the UE can perform uplink data transmission and downlink data transmission simultaneously, thereby introduction of the SBFD resource can increase the amount of UL resources. On this basis, since the UE can report the preamble through the first RO resource overlapping with the SBFD resource, it is equivalent to increasing the UL resources that can be used by the UE when reporting the preamble, thereby reducing uplink access delay of the UE, further improving an user experience at the UE to meet the performance requirements for service continuity.

In one example of the present disclosure, for each RO resource, if the frequency domain position of the RO resource exceeds the uplink subband and/ or uplink bandwidth part BWP used by the UE, the RO resource is invalid.

In one example of the present disclosure, for each RO resource, if the RO resource is located within an SBFD symbol and overlaps with a downlink time domain resource or a flexible time domain resource, the RO resource is valid, or the part of the RO resource that is located within the SBFD symbol and within the uplink BWP used by the UE is valid. The downlink time domain resource includes a downlink time slot and a downlink symbol, and the flexible time domain resource includes a flexible time slot and a flexible symbol.

In one example of the present disclosure, for each RO resource, if the frequency domain position of the RO resource exceeds the uplink subband and/or uplink BWP used by the UE, the RO resource is valid.

As can be seen from above, in the example of the present disclosure, when the configured RO resource exceeds the uplink subband and/or uplink BWP used by the UE, and when the configured RO resource exceeds the UL resource in the SBFD resource, the validity of the RO resource is defined. Thus, the conflict between the RO resource and the frequency domain resource other than the uplink subband and/or uplink BWP can be resolved, and the conflict between the RO resource and other resources other than the UL resource can be resolved.

In one example of the present disclosure, the apparatus further includes:

a first quantity determination module, to obtain a first quantity of configured synchronization signal blocks SSBs;

a first SSB correlation module, to correlate individual RO resources with the SSBs in a time domain order according to the first quantity, in a preset correlation cycle;

a first invalid resource determination module, to determine, for each RO resource, that the RO resource is invalid, if the RO resource is correlated with none of the SSBs.

In one example of the present disclosure, the first SSB correlation module is specifically to:

in the preset correlation cycle, in the time domain order, correlate a foremost second quantity of RO resources in a first UL resource and a second UL resource with the SSBs, wherein, the second quantity is a target product which is a product of the first quantity and a preset quantity of RO resources correlated with each of the SSBs, the first UL resource is a resource located within an uplink subband in the SBFD symbol, and the second UL resource is a resource for transmitting uplink data in the non-SBFD symbol; or

in the preset correlation cycle, in the time domain order, correlate a foremost third quantity of RO resources in the first UL resource with the SSBs, and correlating a foremost fourth quantity of RO resources in the second UL resource with the SSBs, wherein, the third quantity and the fourth quantity are each the target product.

As can be seen from above, in the examples of the present disclosure, the validity of the SSBs is defined according to the correlation between the RO resources and the SSBs. Thus, the correlation between the RO resources within the first UL resource in the SBFD resource and the SSBs can be achieved. Furthermore based on the correlation result, the validity of the RO resource can be determined.

In one example of the present disclosure, for each RO resource correlated with the SSB, if the RO resource is located in the first UL resource or the RO resource is located in the second UL resource, the RO resource is valid; wherein the first UL resource is a resource located within the uplink subband in the SBFD symbol, and the second UL resource is a resource for transmitting uplink data in the non-SBFD symbol.

In one example of the present disclosure, for each first RO resource correlated with the SSB, if the first RO resource spans the first UL resource and the second UL resource, the first RO resource is valid; wherein, the first UL resource is a resource located within an uplink subband in an SBFD symbol, and the second UL resource is a resource for transmitting uplink data in a non-SBFD symbol.

In one example of the present disclosure, for each first RO resource correlated with the SSB, if the first RO resource spans the first UL resource and the second UL resource, the first RO resource is invalid; wherein, the first UL resource is a resource located within the uplink subband in an SBFD symbol, and the second UL resource is a resource for transmitting uplink data in a non-SBFD symbol.

In one example of the present disclosure, for each first RO resource correlated with the SSB, if the first RO resource spans the first UL resource and the second UL resource, the first RO resource is valid; wherein, the first UL resource is a resource located in the uplink subband in an SBFD symbol, and the second UL resource is a resource for transmitting uplink data in a non-SBFD symbol.

In one example of the present disclosure, for each first RO resource correlated with the SSB, if the first RO resource is located in a first non-UL resource and the second UL resource, the first RO resource is invalid; wherein, the first non-UL resource is a resource outside the uplink subband in the SBFD symbol, and the second UL resource is a resource for transmitting uplink data in the non-SBFD symbol.

As can be seen from above, in the example of the present disclosure, the validity of SSB is defined according to the distribution of RO resources in the time domain. The validity determination method for the RO resource being located only in the SBFD symbol, only in the non-SBFD symbol, or across the SBFD symbol and non-SBFD symbol, in the time domain, has been defined. This can solve the conflict problem of the RO resource in the time domain.

In one example of the present disclosure, when the UE supports full-duplex communication, the multiple first RO resources located within the uplink subband of the SBFD symbol are valid; when the UE supports half-duplex communication and does not support full-duplex communication, if the time domain position of the first RO resource located within the uplink subband in the SBFD symbol overlaps with that of the target resource for transmitting data in the downlink channel, then the first RO resource whose priority is higher than that of the target resource based on a preset priority order is valid.

In one example of the present disclosure, the preset priority order is: the cell-defining CD-SSB resource and the non-CD SSB resource, the Type0 type of resource in the physical downlink control channel PDCCH resource, the first RO resource, resources other than the Type0 type of resource in the PDCCH resource, and target resource other than the CD-SSB resource, non-CD SSB resource and PDCCH resource.

As can be seen from above, in the examples of the present disclosure, when there is a conflict between the first RO resource and the target resource in the downlink channel in the time domain, in order to avoid the conflict between the first RO resource and the target resource, the validity of the first RO resource can be determined, thereby solving the problem of confliction between uplink resource and downlink resource.

In one example of the present disclosure, when the UE supports half-duplex communication and does not support full-duplex communication, for each first RO resource, if a first time domain position of the first RO resource is located before a second time domain position of the SSB resource, the first RO resource is invalid; and/ or
for each first RO resource, if the first time domain position of the first RO resource is located after the second time domain position of the SSB resource, and a time interval between the second time domain position and the first time domain position is less than a preset time interval, the first RO resource is invalid.

In one example of the present disclosure, if a subcarrier spacing of the preamble is 1.25 kHz or 5 kHz, the preset time interval is 0 symbol;

if the subcarrier spacing of the preamble is 15 kHz or 30 kHz or 60 kHz or 120 kHz, the preset time interval is 2 symbols;

if the subcarrier spacing of the preamble is 480 kHz, the preset time interval is 8 symbols;

if the subcarrier spacing of the preamble is 960 kHz, the preset time interval is 16 symbols.

As can be seen from above, in the examples of the present disclosure, for the UE that supports half-duplex communication but does not support full-duplex communication, the time interval between the SSB resource and the valid first RO resource is defined to ensure enough time for the UE to configuring communication after using the SSB resource, so as to complete the process of preamble reporting through the first RO resource.

In one example of the present disclosure, when the UE performs PRACH repetition for the preamble, all of the RO resources are divided into multiple RO resource groups, and the RO resources that are not divided into the RO resource groups are invalid, wherein a RO resource group is a set of RO resources with an adjacent arrangement order, and the arrangement order of the RO resources is incremented according to the frequency domain positions of the RO resources from low to high, and the time domain positions of the same from front to back.

In one example of the present disclosure, the RO resource groups are obtained by grouping the RO resources in the SBFD symbol, or by grouping the RO resources in the SBFD symbol and non-SBFD symbol, or by grouping the RO resources in the non-SBFD symbol.

In one example of the present disclosure, the apparatus further includes:

a first signaling broadcast module, to broadcast a first signaling, wherein the first signaling includes a first parameter. When the value of the first parameter is a first value, the first parameter indicates that the RO resource groups are obtained by grouping the RO resources in the SBFD symbol. When the value of the first parameter is a second value, the first parameter indicates that the RO resource groups are obtained by grouping the RO resources in the SBFD symbol and the non-SBFD symbol. When the value of the first parameter is a third value, the first parameter indicate that the RO resource groups are obtained by grouping the RO resources in the non-SBFD symbol.

In one example of the present disclosure, the first signaling further includes a second parameter. The second parameter indicates the quantity of RO resource subgroups between RO resource groups. A RO resource subgroup is a set of RO resources at the same time domain position.

In one example of the present disclosure, when the RO resource groups are obtained by grouping RO resources in the SBFD symbol, the second parameter is the quantity of RO resource subgroups in the SBFD symbol between RO resource groups;

when the RO resource groups are obtained by grouping RO resources in the SBFD symbol and non-SBFD symbol, the second parameter is the quantity of RO resource subgroups in the SBFD symbol and non-SBFD symbol between RO resource groups;

when the RO resource groups are obtained by grouping RO resources in the non-SBFD symbol, the second parameter is the quantity of the RO resource subgroups in the non-SBFD symbol between RO resource groups.

In one example of the present disclosure, when the number of PRACH repetitions is 8, a value of the second parameter is 16;

when the number of PRACH repetitions is 4, the value of the second parameter is 8 or 16;

when the number of PRACH repetitions is 2, the value of the second parameter is 4, 8 or 16.

As can be seen from above, in a case of the PRACH repetition, the examples of the present disclosure can group the RO resources in the SBFD symbol, or group the RO resources in the SBFD symbol and non-SBFD symbol, thereby obtaining the RO resource groups, and performing the PRACH repetition. Further, after grouping in the above manner, a RO resource in the RO resource groups can be determined as a valid RO resource.

In one example of the present disclosure, the apparatus further includes:

a second signaling broadcast module, to broadcast a second signaling;

wherein the second signaling includes a third parameter and/or a fourth parameter. The third parameter indicates the frequency domain positions of the multiple first RO resources, and the fourth parameter indicates the number of first RO resources at the same time domain position.

In one example of the present disclosure, the third parameter indicates the frequency difference between the starting frequency of the first RO resource with the lowest frequency and the starting frequency of the RB where the first RO resource is located.

Corresponding to the aforementioned random access method applied to UE, examples of the present disclosure further provide a random access apparatus applied to UE.

Refer to Figure 25, which is a schematic structural diagram of a random access apparatus applied to UE provided by an example of the present disclosure. The apparatus includes:

a resource selecting module 2501, to select a valid RO resource from all of physical random access channel occasion RO resources, wherein all of the RO resources include multiple first RO resources overlapping with a sub-band full duplex SBFD resource;

a preamble reporting module 2502, to report a preamble to a base station through the selected valid RO resource, so that the base station sends a random access RA response to the UE based on the preamble;

a second random access module 2503, to randomly access the base station based on the RA response through contention based random access CBRA or through non contention or contention free random access CFRA.

As can be seen from above, in the solutions provided by the examples of the present disclosure, all of the RO resources include multiple first RO resources overlapping with an SBFD resource. Therefore, when selecting a RO resource for preamble reporting, the UE can select a first RO resource. Since the SBFD resource is a full-duplex resource, that is, the UE can perform uplink data transmission and downlink data transmission simultaneously, thereby introduction of the SBFD resource can increase the amount of UL resources. On this basis, since the UE can report the preamble through the first RO resource overlapping with the SBFD resource, it is equivalent to increasing the UL resources that can be used by the UE when reporting the preamble, thereby reducing uplink access delay of the UE, further improving an user experience at the UE to meet the performance requirements for service continuity.

In one example of the present disclosure, for each RO resource, if the frequency domain position of the RO resource exceeds the uplink subband and/or uplink bandwidth part BWP used by the UE, the RO resource is invalid.

In one example of the present disclosure, for each RO resource, if the RO resource is located within an SBFD symbol and overlaps with a downlink time domain resource or a flexible time domain resource, the RO resource is valid, or the part of the RO resource that is located within the SBFD symbol and within the uplink BWP used by the UE is valid. The downlink time domain resource includes a downlink time slot and a downlink symbol, and the flexible time domain resource includes a flexible time slot and a flexible symbol.

In one example of the present disclosure, for each RO resource, if the frequency domain position of the RO resource exceeds the uplink subband and/or uplink BWP used by the UE, the RO resource is valid.

In one example of the present disclosure, when the selected valid RO resource is a part of the RO resource located within the SBFD symbol and within the uplink BWP, the preamble reporting module 2502 is specifically to:
report the preamble to the base station according to a target subcarrier spacing through the selected valid RO resource, so that the base station completes the random access process of the UE based on the preamble, wherein the target subcarrier spacing is a preset subcarrier spacing or a minimum subcarrier spacing or a maximum subcarrier spacing that matches the quantity of RBs.

As can be seen from above, in the examples of the present disclosure, when the configured RO resource exceeds the uplink subband and/or uplink BWP used by the UE, and when the configured RO resource exceeds the UL resource in the SBFD resource, the validity of the RO resource is defined. Thus, the conflict between the RO resource and the frequency domain resource other than the uplink subband and/or uplink BWP can be resolved, and the conflict between the RO resource and other resources other than the UL resource can be resolved.

In one example of the present disclosure, the apparatus further includes:

a second quantity determination module, to obtain a first quantity of configured synchronization signal blocks SSBs;

a second SSB correlation module, to correlate RO resources with the SSBs in a time domain order according to the first quantity, in a preset correlation cycle;

a second invalid resource determination module, to determine, for each RO resource, that the RO resource is invalid if the RO resource is correlated with none of the SSBs,.

In one example of the present disclosure, the second SSB correlation module is specifically to:

in the preset correlation cycle, in the time domain order, correlate a foremost second quantity of the RO resources in a first UL resource and a second UL resource with the SSBs, wherein, the second quantity is a target product which is a product of the first quantity and a preset quantity of RO resources correlated with each of the SSBs, the first UL resource is a resource located within an uplink subband in the SBFD symbol, and the second UL resource is a resource for transmitting uplink data in the non-SBFD symbol; or

in the preset correlation cycle, in the time domain order, correlate a foremost third quantity of RO resources in the first UL resource with the SSBs, and correlating a foremost fourth quantity of RO resources in the second UL resource with the SSBs, wherein, the third quantity and the fourth quantity are each the target product.

As can be seen from above, in the examples of the present disclosure, the validity of the SSBs is defined according to the correlation between the ROs resource and the SSBs. Thus, the correlation between the RO resources within the first UL resource in the SBFD resource and the SSBs can be achieved. Further, based on the correlation result, the validity of the RO resource can be determined.

In one example of the present disclosure, for each RO resource correlated with the SSB, if the RO resource is located in the first UL resource or the RO resource is located in the second UL resource, the RO resource is valid; wherein the first UL resource is a resource located within the uplink subband in the SBFD symbol, and the second UL resource is a resource for transmitting uplink data in the non-SBFD symbol.

In one example of the present disclosure, for each first RO resource correlated with the SSB, if the first RO resource spans the first UL resource and the second UL resource, the first RO resource is valid; wherein, the first UL resource is a resource located within an uplink subband in an SBFD symbol, and the second UL resource is a resource used for transmitting uplink data in a non-SBFD symbol.

In one example of the present disclosure, for each first RO resource correlated with the SSB, if the first RO resource spans the first UL resource and the second UL resource, the first RO resource is invalid; wherein, the first UL resource is a resource located within an uplink subband in an SBFD symbol, and the second UL resource is a resource for transmitting uplink data in a non-SBFD symbol.

In one example of the present disclosure, for each first RO resource correlated with the SSB, if the first RO resource is located in the first non-UL resource and the second UL resource, the part of the first RO resource which is located in the second UL resource is valid; wherein, the first non-UL resource is a resource outside an uplink subband in an SBFD symbol, and the second UL resource is a resource for transmitting uplink data in a non-SBFD symbol.

In one example of the present disclosure, for each first RO resource correlated with the SSB, if the first RO resource is located in the first non-UL resource and the second UL resource, the first RO resource is invalid; wherein, the first non-UL resource is a resource outside the uplink subband in the SBFD symbol, and the second UL resource is a resource for transmitting uplink data in the non-SBFD symbol.

As can be seen from above, in the examples of the present disclosure, the validity of SSB is defined according to the distribution of RO resources in the time domain. The validity determination method for the RO resource located only in the SBFD symbol, only in the non-SBFD symbol, or across the SBFD symbol and non-SBFD symbol, in the time domain, has been defined. This can solve the conflict problem of the RO resource in the time domain.

In one example of the present disclosure, when the UE supports full-duplex communication, the multiple first RO resources located within the uplink subband of the SBFD symbol are valid; when the UE supports half-duplex communication and does not support full-duplex communication, if the time domain position of the first RO resource located within the uplink subband in the SBFD symbol overlaps with that of the target resource for transmitting data in the downlink channel, then the first RO resource whose priority is higher than that of the target resource based on a preset priority order is valid.

In one example of the present disclosure, the preset priority order is: the cell-defining CD-SSB resource and the non-CD SSB resource, the Type0 type of resource in the physical downlink control channel PDCCH resource, the first RO resource, resources other than the Type0 type of resource in the PDCCH resource, and target resource other than the CD-SSB resource, non-CD SSB resource and PDCCH resource.

As can be seen from above, in the examples of the present disclosure, when there is a conflict between the first RO resource and the target resource in the downlink channel in the time domain, in order to avoid the conflict between the first RO resource and the target resource, the validity of the first RO resource can be determined, thereby solving the problem of confliction between uplink resource and downlink resource.

In one example of the present disclosure, when the UE supports half-duplex communication and does not support full-duplex communication, for each first RO resource, if a first time domain position of the first RO resource is located before a second time domain position of the SSB resource, the first RO resource is invalid; and/ or

for each first RO resource, if the first time domain position of the first RO resource is located after the second time domain position of the SSB resource, and a time interval between the second time domain position and the first time domain position is less than a preset time interval, the first RO resource is invalid.

In one example of the present disclosure, if a subcarrier spacing of the preamble is 1.25 kHz or 5 kHz, the preset time interval is 0 symbol;

if the subcarrier spacing of the preamble is 15 kHz or 30 kHz or 60 kHz or 120 kHz, the preset time interval is 2 symbols;

if the subcarrier spacing of the preamble is 480 kHz, the preset time interval is 8 symbols;

if the subcarrier spacing of the preamble is 960 kHz, the preset time interval is 16 symbols.

As can be seen from above, in the examples of the present disclosure, for the UE that supports half-duplex communication but does not support full-duplex communication, the time interval between the SSB resource and the valid first RO resource is defined to ensure enough time for the UE to configure communication after using the SSB resource, so as to complete the process of preamble reporting through the first RO resource.

In one example of the present disclosure, when the UE performs PRACH repetition for the preamble, all of the RO resources are divided into multiple RO resource groups, and the RO resources that are not divided into the RO resource groups are invalid, wherein a RO resource group is a set of RO resources with an adjacent arrangement order, and the arrangement order of the RO resources is incremented according to the frequency domain positions of the RO resources from low to high, and the time domain positions of the same from front to back.

In one example of the present disclosure, the RO resource groups are obtained by grouping the RO resources in the SBFD symbol, or by grouping the RO resources in the SBFD symbol and non-SBFD symbol, or by grouping the RO resources in the non-SBFD symbol.

In one example of the present disclosure, the apparatus further includes:

a first signaling receiving module, to receive the first signaling broadcast by the base station, wherein the first signaling includes a first parameter, when the value of the first parameter is a first value, the first parameter indicates that the RO resource groups are obtained by grouping the RO resources in the SBFD symbol; when the value of the first parameter is a second value, the first parameter indicates that the RO resource groups are obtained by grouping the RO resources in the SBFD symbol and the non-SBFD symbol; when the value of the first parameter is a third value, the first parameter indicate that the RO resource groups are obtained by grouping the RO resources in the non-SBFD symbol.

In one example of the present disclosure, the first signaling further includes a second parameter. The second parameter indicates the quantity of RO resource subgroups between RO resource groups. A RO resource subgroup is a set of RO resources at the same time domain position.

In one example of the present disclosure, when the RO resource groups are obtained by grouping RO resources in the SBFD symbol, the second parameter is the quantity of RO resource subgroups in the SBFD symbol between RO resource groups;

when the RO resource groups are obtained by grouping RO resources in the SBFD symbol and non-SBFD symbol, the second parameter is the quantity of RO resource subgroups in the SBFD symbol and non-SBFD symbol between RO resource groups;

when the above RO resource groups are obtained by grouping RO resources in the non-SBFD symbol, the second parameter is the quantity of RO resource subgroups in the non-SBFD symbol between RO resource groups.

In one example of the present disclosure, when the number of PRACH repetitions is 8, a value of the second parameter is 16;

when the number of PRACH repetitions is 4, the value of the second parameter is 8 or 16;

when the number of PRACH repetitions is 2, the value of the second parameter is 4, 8 or 16.

As can be seen from above, in a case of the PRACH repetition, the examples of the present disclosure can group the RO resources in the SBFD symbol, or group the RO resources in the SBFD symbol and non-SBFD symbol, thereby obtaining the RO resource groups, and performing the PRACH repetition. And after grouping in the above manner, a RO resource in the RO resource group can be determined as a valid RO resource.

In one example of the present disclosure, the apparatus further includes:

an SIB receiving module, to receive a second signaling broadcast by the base station;

wherein the second signaling includes a third parameter and/or a fourth parameter; the third parameter indicates the frequency domain positions of the multiple first RO resources, and the fourth parameter indicates the number of first RO resources at the same time domain position.

In one example of the present disclosure, the third parameter indicates the frequency difference between the starting frequency of the first RO resource with the lowest frequency and the starting frequency of the RB where the first RO resource is located.

In an example of the present disclosure, when the random access process of the UE is initiated by a PDCCH command, the time difference between the time when the UE receives the PDCCH command and the time when the UE reports the preamble is greater than or equal to a target time difference, wherein, the target time difference is calculated based on the preparation time of the UE for PUSCH, BWP switching time, channel delay, and switching time between uplink carriers.

In one example of the present disclosure, the target time difference is calculated based on the following formula:

$$T = N_{T,2} + \Delta_{BWPSwitching} + \Delta_{Delay} + T_{switch}$$

wherein, T is the target time difference, $N_{T,2}$ is the preparation time of the UE for PUSCH, $\Delta_{BWPSwitching}$ is the BWP switching time, $\Delta_{Delay}$ is the channel delay, and $T_{switch}$ is the switching time between uplink carriers.

As can be seen from above, in the examples of the present disclosure, the time difference between the time when the UE receives the PDCCH command and the time when the UE reports the preamble is defined, so as to ensure that the time when the UE reports the preamble matches the communication capability of the UE.

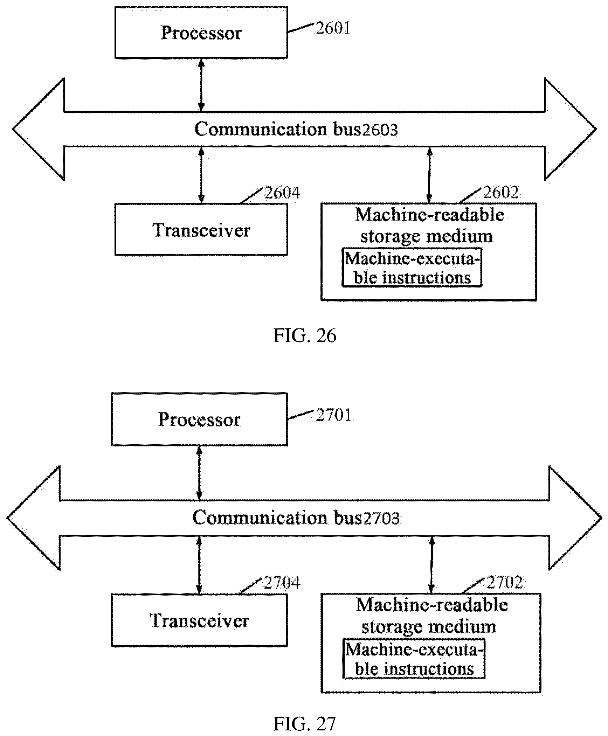

Corresponding to the aforementioned random access method applied to a base station, an example of the present disclosure further provides a base station, as shown in Figure 26. The base station includes:

a processor 2601;

a transceiver 2604;

a machine-readable storage medium 2602 having machine-executable instructions that can be executed by the processor 2601 stored therein; the machine-executable instructions cause the processor 2601 to:

receive a preamble reported by UE on a valid physical random access channel occasion RO resource, wherein the valid RO resource is selected by the UE from all of RO resources, and there is a first RO resource overlapping with a sub-band full duplex SBFD resource in all of the RO resources;

send a random access RA response to the UE based on the preamble, so that the UE randomly accesses the base station through contention based random access CBRA or non contention or contention free random access CFRA.

As shown in Figure 26, the network device may further include a communication bus 2603. The processor 2601, the machine-readable storage medium 2602, and the transceiver 2604 communicate with each other through the communication bus 2603, which may be a Peripheral Component Interconnect (PCI) bus or an Extended Industry Standard Architecture (EISA) bus, and the like. The communication bus 2603 may be divided into an address bus, a data bus, a control bus, and the like.

The transceiver 2604 may be a wireless communication module, and perform data interaction with other devices under the control of the processor 2601.

The machine-readable storage medium 2602 may include a random access memory (RAM) or a non-volatile memory (NVM), such as at least one disk storage. In addition, the machine-readable storage medium 2602 may also be at least one storage device located away from the aforementioned processor.

The processor 2601 can be a general-purpose processor, including a central processing unit (CPU), a network processor (NP), etc.; can also be a digital signal processor (DSP), an application specific integrated circuit (ASIC), a field programmable gate array (FPGA) or other programmable logic devices, discrete gates or transistor logic devices, and discrete hardware components.

As can be seen from above, in the solutions provided by the examples of the present disclosure, all of the RO resources include multiple first RO resources overlapping with an SBFD resource. Therefore, when selecting a RO resource for preamble reporting, the UE can select a first RO resource. Since the SBFD resource is a full-duplex resource, that is, the UE can perform uplink data transmission and downlink data transmission simultaneously, thereby introduction of the SBFD resource can increase the amount of UL resources. On this basis, since the UE can report the preamble through the first RO resource overlapping with the SBFD resource, it is equivalent to increasing the UL resources that can be used by the UE when reporting the preamble, thereby reducing uplink access delay of the UE, further improving an user experience at the UE to meet the performance requirements for service continuity.

In one example of the present disclosure, for each RO resource, if the frequency domain position of the RO resource exceeds the uplink subband and/or uplink bandwidth part BWP used by the UE, the RO resource is invalid.

In one example of the present disclosure, for each RO resource, if the RO resource is located within an SBFD symbol and overlaps with a downlink time domain resource or a flexible time domain resource, the RO resource is valid, or the part of the RO resource that is located within the SBFD symbol and within the uplink BWP used by the UE is valid. The downlink time domain resource includes a downlink time slot and a downlink symbol, and the flexible time domain resource includes a flexible time slot and a flexible symbol.

In one example of the present disclosure, for each RO resource, if the frequency domain position of the RO resource exceeds the uplink subband and/or uplink BWP used by the UE, the RO resource is valid.

As can be seen from above, in the examples of the present disclosure, when the configured RO resource exceeds the uplink subband and/or uplink BWP used by the UE, and when the configured RO resource exceeds the UL resource in the SBFD resource, the validity of the RO resource is defined. Thus, the conflict between the RO resource and the frequency domain resource other than the uplink subband and/or uplink BWP can be resolved, and the conflict between the RO resource and other resources other than the UL resource can be resolved.

In one example of the present disclosure, the machine-executable instructions further cause the processor to:

obtain a first quantity of configured synchronization signal blocks SSBs;

in a preset correlation cycle, correlate RO resources with the SSBs in a time domain order according to the first quantity;

for each RO resource, determine that the RO resource is invalid if the RO resource is correlated with none of the SSBs.

In one example of the present disclosure, in the preset correlation cycle, correlating RO resources with the SSBs in the time domain order according to the first quantity, includes:

in the preset correlation cycle, in the time domain order, correlating a foremost second quantity of RO resources in a first UL resource and a second UL resource with the SSBs, wherein, the second quantity is a target product which is a product of the first quantity and a preset quantity of RO resources correlated with each of the SSBs, the first UL resource is a resource located within an uplink subband in the SBFD symbol, and the second UL resource is a resource for transmitting uplink data in the non-SBFD symbol; or

in a preset correlation cycle, in the time domain order, correlating a foremost third quantity of RO resources in the first UL resource with the SSBs, and correlating a foremost fourth quantity of RO resources in the second UL resource with the SSBs, wherein, the third quantity and the fourth quantity are each the target product.

As can be seen from above, in the examples of the present disclosure, the validity of the SSBs is defined according to the correlation between the RO resources and the SSBs. Thus, the correlation between the RO resources within the first UL resource in the SBFD resource and the SSBs can be achieved. Further, based on the correlation result, the validity of the RO resource can be determined.

In one example of the present disclosure, for each RO resource correlated with the SSB, if the RO resource is located in the first UL resource or the RO resource is located in the second UL resource, the RO resource is valid; wherein the first UL resource is a resource located within the uplink subband in the SBFD symbol, and the second UL resource is a resource for transmitting uplink data in the non-SBFD symbol.

In one example of the present disclosure, for each first RO resource correlated with the SSB, if the first RO resource spans the first UL resource and the second UL resource, the first RO resource is valid; wherein, the first UL resource is a resource located within an uplink subband in an SBFD symbol, and the second UL resource is a resource for transmitting uplink data in a non-SBFD symbol.

In one example of the present disclosure, for each first RO resource correlated with the SSB, if the first RO resource spans the first UL resource and the second UL resource, the first RO resource is invalid; wherein, the first UL resource is a resource located within an uplink subband in an SBFD symbol, and the second UL resource is a resource for transmitting uplink data in a non-SBFD symbol.

In one example of the present disclosure, for each first RO resource correlated with the SSB, if the first RO resource is located in the first non-UL resource and the second UL resource, the part of the first RO resource which is located in the second UL resource is valid;

wherein, the first non-UL resource is a resource outside an uplink subband in an SBFD symbol, and the second UL resource is a resource for transmitting uplink data in a non-SBFD symbol.

For each first RO resource correlated with the SSB, if the first RO resource is located in the first non-UL resource and the second UL resource, the first RO resource is invalid;

wherein, the first non-UL resource is a resource outside the uplink subband in the SBFD symbol, and the second UL resource is a resource for transmitting uplink data in the non-SBFD symbol.

As can be seen from above, in the examples of the present disclosure, the validity of SSB is defined according to the distribution of RO resources in the time domain. The validity determination method for the RO resource being located only in the SBFD symbol, only in the non-SBFD symbol, or across the SBFD symbol and non-SBFD symbol, in the time domain, has been defined. This can solve the conflict problem of the RO resource in the time domain.

In one example of the present disclosure, when the UE supports full-duplex communication, the multiple first RO resources located within the uplink subband of the SBFD symbol are valid;

when the UE supports half-duplex communication and does not support full-duplex communication, if the time domain position of the first RO resource located within the uplink subband in the SBFD symbol overlaps with that of the target resource for transmitting data in the downlink channel, then the first RO resource whose priority is higher than that of the target resource based on a preset priority order is valid.

In one example of the present disclosure, the preset priority order is: the cell-defining CD-SSB resource and the non-CD SSB resource, the Type0 type of resource in the physical downlink control channel PDCCH resource, the first RO resource, resources other than the Type0 type of resource in the PDCCH resource, and target resource other than the CD-SSB resource, non-CD SSB resource and PDCCH resource.

As can be seen from above, in the examples of the present disclosure, when there is a conflict between the first RO resource and the target resource in the downlink channel in the time domain, in order to avoid the conflict between the first RO resource and the target resource, the validity of the first RO resource can be determined, thereby solving the problem of confliction between uplink resource and downlink resource.

In one example of the present disclosure, when the UE supports half-duplex communication but does not support full-duplex communication, for each first RO resource, if a first time domain position of the first RO resource is located before a second time domain position of the SSB resource, the first RO resource is invalid;

and/ or

for each first RO resource, if the first time domain position of the first RO resource is located after the second time domain position of the SSB resource, and a time interval between the second time domain position and the first time domain position is less than a preset time interval, the first RO resource is invalid.

In one example of the present disclosure, if a subcarrier spacing of the preamble is 1.25 kHz or 5 kHz, the preset time interval is 0 symbol;

if the subcarrier spacing of the preamble is 15 kHz or 30 kHz or 60 kHz or 120 kHz, the preset time interval is 2 symbols;

if the subcarrier spacing of the preamble is 480 kHz, the preset time interval is 8 symbols;

if the subcarrier spacing of the preamble is 960 kHz, the preset time interval is 16 symbols.

As can be seen from above, in the examples of the present disclosure, for the UE that supports half-duplex communication but does not support full-duplex communication, the time interval between the SSB resource and the valid first RO resource is defined to ensure enough time for the UE to configure communication after using the SSB resource, so as to complete the process of preamble reporting through the first RO resource.

In one example of the present disclosure, when the UE performs PRACH repetition for the preamble, all of the RO resources are divided into multiple RO resource groups, and the RO resources that are not divided into the RO resource groups are invalid, wherein a RO resource group is a set of RO resources with an adjacent arrangement order, and the arrangement order of the RO resources is incremented according to the frequency domain positions of the RO resources from low to high, and the time domain positions of the same from front to back.

In one example of the present disclosure, the RO resource groups are obtained by grouping the RO resources in the SBFD symbol, or by grouping the RO resources in the SBFD symbol and non-SBFD symbol, or by grouping the RO resources in the non-SBFD symbol.

In one example of the present disclosure, before receiving the preamble reported by the UE on the valid random access occasion RO resource, the machine-executable instructions further cause the processor to:

broadcast a first signaling, wherein the first signaling includes a first parameter, when the value of the first parameter is a first value, the first parameter indicates that the RO resource groups are obtained by grouping the RO resources in the SBFD symbol; when the value of the first parameter is a second value, the first parameter indicates that the RO resource groups are obtained by grouping the RO resources in the SBFD symbol and the non-SBFD symbol; when the value of the first parameter is a third value, the first parameter indicate that the RO resource groups are obtained by grouping the RO resources in the non-SBFD symbol.

In one example of the present disclosure, the first signaling further includes a second parameter. The second parameter indicates the quantity of RO resource subgroups between RO resource groups. A RO resource subgroup is a set of RO resources at the same time domain position.

In one example of the present disclosure, when the RO resource groups are obtained by grouping RO resources in the SBFD symbol, the second parameter is the quantity of RO resource subgroups in the SBFD symbol between RO resource groups;

when the RO resource groups are obtained by grouping RO resources in the SBFD symbol and non-SBFD symbol, the second parameter is the quantity of RO resource subgroups in the SBFD symbol and non-SBFD symbol between RO resource groups;

when the RO resource groups are obtained by grouping RO resources in the non-SBFD symbol, the above second parameter is the quantity of RO resource subgroups in the non-SBFD symbol between RO resource groups.

In one example of the present disclosure, when the number of PRACH repetitions is 8, a value of the second parameter is 16;

when the number of PRACH repetitions is 4, the value of the second parameter is 8 or 16;
when the number of PRACH repetitions is 2, the value of the second parameter is 4, 8 or 16.

As can be seen from above, in a case of the PRACH repetition, the examples of the present disclosure can group the RO resources in the SBFD symbol, or group the RO resources in the SBFD symbol and non-SBFD symbol, thereby obtaining the RO resource groups, and performing the PRACH repetition. Further, after grouping in the above manner, a RO resource in the RO resource group can be determined as a valid RO resource.

In one example of the present disclosure, the machine executable instructions further cause the processor to:

broadcast a second signaling;

wherein the second signaling includes a third parameter and/or a fourth parameter; the third parameter indicates the frequency domain positions of the multiple first RO resources, and the fourth parameter indicates the number of first RO resources at the same time domain position.

In one example of the present disclosure, the third parameter indicates the frequency difference between the starting frequency of the first RO resource with the lowest frequency and the starting frequency of the RB where the first RO resource is located.

Corresponding to the aforementioned random access method applied to UE, an example of the present disclosure further provides UE.

An example of the present disclosure provides UE, as shown in Figure 27. The UE includes:

a processor 2701;

a transceiver 2704;

a machine-readable storage medium 2702 having machine-executable instructions that can be executed by the processor 2701 stored therein; the machine-executable instructions cause the processor 2701 to:

select a valid physical random access channel occasion RO resource from all of RO resources, wherein all of the RO resources include multiple first RO resources overlapping with a sub-band full duplex SBFD resource;

report a preamble to a base station through the selected valid RO resource, so that the base station sends a random access RA response to the UE based on the preamble;

based on the RA response, randomly access the base station through contention based random access CBRA or through non contention or contention free random access CFRA.

As shown in Figure 27, the network device may further include a communication bus 2703. The processor 2701, the machine-readable storage medium 2702, and the transceiver 2704 communicate with each other through the communication bus 2703, which may be a Peripheral Component Interconnect (PCI) bus or an Extended Industry Standard Architecture (EISA) bus, and the like. The communication bus 2703 may be divided into an address bus, a data bus, a control bus, and the like.

The transceiver 2704 may be a wireless communication module, and performs data interaction with other devices under the control of the processor 2701.

The machine-readable storage medium 2702 may include a random access memory (RAM) or a non-volatile memory (NVM), such as at least one disk storage. In addition, the machine-readable storage medium 2702 may also be at least one storage device located away from the aforementioned processor.

The processor 2701 can be a general-purpose processor, including a central processing unit (CPU), a network processor (NP), etc.; can also be a digital signal processor (DSP), an application specific integrated circuit (ASIC), a field programmable gate array (FPGA) or other programmable logic devices, discrete gates or transistor logic devices, and discrete hardware components.

As can be seen from above, in the solutions provided by the examples of the present disclosure, all of the RO resources include multiple first RO resources overlapping with an SBFD resource. Therefore, when selecting a RO resource for preamble reporting, the UE can select a first RO resource. Since the SBFD resource is a full-duplex resource, that is, the UE can perform uplink data transmission and downlink data transmission simultaneously, thereby introduction of the SBFD resource can increase the amount of UL resources. On this basis, since the UE can report the preamble through the first RO resource overlapping with the SBFD resource, it is equivalent to increasing the UL resources that can be used by the UE when reporting the preamble, thereby reducing uplink access delay of the UE, further improving an user experience at the UE to meet the performance requirements for service continuity.

In one example of the present disclosure, for each RO resource, if the frequency domain position of the RO resource exceeds the uplink subband and/ or uplink bandwidth part BWP used by the UE, the RO resource is invalid.

In one example of the present disclosure, for each RO resource, if the RO resource is located within an SBFD symbol and overlaps with a downlink time domain resource or a flexible time domain resource, the RO resource is valid, or the part of the RO resource that is located within the SBFD symbol and within the uplink BWP used by the UE is valid. The downlink time domain resource includes a downlink time slot and a downlink symbol, and the flexible time domain resource includes a flexible time slot and a flexible symbol.

In one example of the present disclosure, for each RO resource, if the frequency domain position of the RO resource exceeds the uplink subband and/or uplink BWP used by the UE, the RO resource is valid.

In one example of the present disclosure, when the selected valid RO resource is a part of the RO resource located within the SBFD symbol and within the uplink BWP, reporting the preamble to the base station through the selected valid RO resource includes:

reporting the preamble to the base station according to a target subcarrier spacing through the selected valid RO resource, wherein the target subcarrier spacing is a preset subcarrier spacing or a minimum subcarrier spacing or a maximum subcarrier spacing that matches the quantity of RBs.

As can be seen from above, in the examples of the present disclosure, when the configured RO resource exceeds the uplink subband and/or uplink BWP used by the UE, and when the configured RO resource exceeds the UL resource in the SBFD resource, the validity of the RO resource is defined. Thus, the conflict between the RO resource and the frequency domain resource other than the uplink subband and/or uplink BWP can be resolved, and the conflict between the RO resource and other resources other than the UL resource can be resolved.

In one example of the present disclosure, the machine-executable instructions further cause the processor to:

obtain a first quantity of configured synchronization signal blocks SSBs;

in a preset correlation cycle, correlate RO resources with the SSBs in a time domain order according to the first quantity;

for each RO resource, determine that the RO resource is invalid if the RO resource is correlated with none of the SSBs.

In one example of the present disclosure, correlating the RO resources with the SSBs in the time domain order according to the first quantity, in the preset correlation cycle, includes:

in the preset correlation cycle, in the time domain order, correlating a foremost second quantity of RO resources in a first UL resource and a second UL resource with the SSBs, wherein, the second quantity is a target product which is a product of the first quantity and a preset quantity of RO resources correlated with each of the SSBs, the first UL resource is a resource located within an uplink subband in the SBFD symbol, and the second UL resource is a resource for transmitting uplink data in the non-SBFD symbol; or

in the preset correlation cycle, in the time domain order, correlating a foremost third quantity of RO resources in the first UL resource with the SSBs, and correlating a foremost fourth quantity of RO resources in the second UL resource with the SSBs, wherein, the third quantity and the fourth quantity are each the target product.

As can be seen from above, in the examples of the present disclosure, the validity of the SSBs is defined according to the correlation between the RO resources and the SSBs. Thus, the correlation between the RO resources within the first UL resource in the SBFD resource and the SSBs can be achieved. Further, based on the correlation result, the validity of the RO resource can be determined.

In one example of the present disclosure, for each RO resource correlated with the SSB, if the RO resource is located in the first UL resource or the RO resource is located in the second UL resource, the RO resource is valid; wherein the first UL resource is a resource located within the uplink subband in the SBFD symbol, and the second UL resource is a resource for transmitting uplink data in the non-SBFD symbol.

In one example of the present disclosure, for each first RO resource correlated with the SSB, if the first RO resource spans the first UL resource and the second UL resource, the first RO resource is valid; wherein, the first UL resource is a resource located within an uplink subband in an SBFD symbol, and the second UL resource is a resource for transmitting uplink data in a non-SBFD symbol.

In one example of the present disclosure, for each first RO resource correlated with the SSB, if the first RO resource spans the first UL resource and the second UL resource, the first RO resource is invalid; wherein, the first UL resource is a resource located within an uplink subband in an SBFD symbol, and the second UL resource is a resource for transmitting uplink data in a non-SBFD symbol.

In one example of the present disclosure, for each first RO resource correlated with the SSB, if the first RO resource is located in the first non-UL resource and the second UL resource, the part of the first RO resource which is located in the second UL resource is valid; wherein, the first non-UL resource is a resource outside an uplink subband in an SBFD symbol, and the second UL resource is a resource for transmitting uplink data in a non-SBFD symbol.

In one example of the present disclosure, for each first RO resource correlated with the SSB, if the first RO resource is located in the first non-UL resource and the second UL resource, the first RO resource is invalid; wherein, the first non-UL resource is a resource outside the uplink subband in the SBFD symbol, and the second UL resource is a resource for transmitting uplink data in the non-SBFD symbol.

As can be seen from above, in the examples of the present disclosure, the validity of SSB is defined according to the distribution of RO resources in the time domain. The validity determination method for the RO resource being located only in the SBFD symbol, only in the non-SBFD symbol, or across the SBFD symbol and non-SBFD symbol, in the time domain, has been defined. This can solve the conflict problem of the RO resource in the time domain.

In one example of the present disclosure, when the UE supports full-duplex communication, the multiple first RO resources located within the uplink subband of the SBFD symbol are valid; when the UE supports half-duplex communication and does not support full-duplex communication, if the time domain position of a first RO resource located within the uplink subband in the SBFD symbol overlaps with that of the target resource for transmitting data in the downlink channel, then the first RO resource whose priority is higher than that of the target resource based on a preset priority order is valid.

In one example of the present disclosure, the preset priority order is: the cell-defining CD-SSB resource and the non-CD SSB resource, the Type0 type of resource in the physical downlink control channel PDCCH resource, the first RO resource, resources other than the Type0 type of resource in the PDCCH resource, and target resource other than the CD-SSB resource, non-CD SSB resource and PDCCH resource.

As can be seen from above, in the examples of the present disclosure, when there is a conflict between the first RO resource and the target resource in the downlink channel in the time domain, in order to avoid the conflict between the first RO resource and the target resource, the validity of the first RO resource can be determined, thereby solving the problem of confliction between uplink resource and downlink resource.

In one example of the present disclosure, when the UE supports half-duplex communication but does not support full-duplex communication, for each first RO resource, if a first time domain position of the first RO resource is located before a second time domain position of the SSB resource, the first RO resource is invalid; and/or for each first RO resource, if the first time domain position of the first RO resource is located after the second time domain position of the SSB resource, and a time interval between the second time domain position and the first time domain position is less than a preset time interval, the first RO resource is invalid.

In one example of the present disclosure, if a subcarrier spacing of the preamble is 1.25 kHz or 5 kHz, the preset time interval is 0 symbol;

if the subcarrier spacing of the preamble is 15 kHz or 30 kHz or 60 kHz or 120 kHz, the preset time interval is 2 symbols;

if the subcarrier spacing of the preamble is 480 kHz, the preset time interval is 8 symbols;

if the subcarrier spacing of the preamble is 960 kHz, the preset time interval is 16 symbols.

As can be seen from above, in the examples of the present disclosure, for the UE that supports half-duplex communication but does not support full-duplex communication, the time interval between the SSB resource and the valid first RO resource is defined to ensure enough time for the UE to configure communication after using the SSB resource, to complete the process of preamble reporting through the first RO resource.

In one example of the present disclosure, when the UE performs PRACH repetition for the preamble, all of the RO resources are divided into multiple RO resource groups, and the RO resources that are not divided into the RO resource groups are invalid, wherein a RO resource group is a set of RO resources with an adjacent arrangement order, and the arrangement order of the RO resources is incremented according to the frequency domain positions of the RO resources from low to high, and the time domain positions of the same from front to back.

In one example of the present disclosure, the RO resource groups are obtained by grouping the RO resources in the SBFD symbol, or by grouping the RO resources in the SBFD symbol and non-SBFD symbol, or by grouping the RO resources in the non-SBFD symbol.

In one example of the present disclosure, before selecting the valid physical random access channel occasion RO resource from all of the RO resources, the machine-executable instructions further cause the processor to: receive a first signaling broadcast by the base station, wherein the first signaling includes a first parameter, when the value of the first parameter is a first value, the first parameter indicates that the RO resource groups are obtained by grouping the RO resources in the SBFD symbol; when the value of the first parameter is a second value, the first parameter indicates that the RO resource groups are obtained by grouping the RO resources in the SBFD symbol and the non-SBFD symbol; when the value of the first parameter is a third value, the first parameter indicate that the RO resource groups are obtained by grouping the RO resources in the non-SBFD symbol.

In one example of the present disclosure, the first signaling further includes a second parameter. The second parameter indicates the quantity of RO resource subgroups between RO resource groups. A RO resource subgroup is: a set of RO resources at the same time domain position.

In one example of the present disclosure, when the RO resource groups are obtained by grouping RO resources in the SBFD symbol, the second parameter is: the quantity of RO resource subgroups in the SBFD symbol between RO resource groups;

when the RO resource groups are obtained by grouping RO resources in the SBFD symbol and non-SBFD symbol, the second parameter is the quantity of RO resource subgroups in the SBFD symbol and non-SBFD symbol between RO resource groups;

when the RO resource groups are obtained by grouping RO resources in the non-SBFD symbol, the above second parameter is the quantity of RO resource subgroups in non-SBFD symbol between RO resource groups.

In one example of the present disclosure, when the number of PRACH repetitions is 8, a value of the second parameter is 16;

when the number of PRACH repetitions is 4, the value of the second parameter is 8 or 16;

when the number of PRACH repetitions is 2, the value of the second parameter is 4, 8 or 16.

As can be seen from above, in a case of the PRACH repetition, the examples of the present disclosure can group the RO resources in the SBFD symbol, or group the RO resources in the SBFD symbol and non-SBFD symbol, thereby obtaining the RO resource groups, and performing the PRACH repetition. Further, after grouping in the above manner, a RO resource in the RO resource group can be determined as a valid RO resource.

In one example of the present disclosure, the machine-executable instructions further cause the processor to:

receive a second signaling broadcast by the base station;

wherein the second signaling includes a third parameter and/ or a fourth parameter; the third parameter indicates the frequency domain positions of the multiple first RO resources, and the fourth parameter indicates the number of first RO resources at the same time domain position.

In one example of the present disclosure, the third parameter indicates the frequency difference between the starting frequency of the first RO resource with the lowest frequency and the starting frequency of the RB where the first RO resource is located.

In one example of the present disclosure, when the random access process of the UE is initiated by a PDCCH command, the time difference between the time when the UE receives the PDCCH command and the time when the UE reports the preamble is greater than or equal to a target time difference, wherein, the target time difference is calculated based on the preparation time of the UE for PUSCH, BWP switching time, channel delay, and switching time between uplink carriers.

In one example of the present disclosure, the target time difference is calculated based on the following formula:

$$T = \mathrm{N_{T,2}} + \Delta_{\mathrm{BWPSwitching}} + \Delta_{\mathrm{Delay}} + \mathrm{T_{switch}}$$

wherein, T is the target time difference, $\mathrm{N_{T,2}}$ is the preparation time of the UE for PUSCH, $\Delta_{\mathrm{BWPSwitching}}$ is the BWP switching time, $\Delta_{\mathrm{Delay}}$ is the channel delay, and $\mathrm{T_{switch}}$ is the switching time between uplink carriers.

As can be seen from above, in the examples of the present disclosure, the time difference between the time when the UE receives the PDCCH command and the time when the UE reports the preamble, so as to ensure that the time when the UE reports the preamble matches the communication capability of the UE.

Based on the same inventive concept, according to the random access methods provided by the above examples of the present disclosure, it is provided a machine-readable storage medium having machine-executable instructions stored therein, that when called and executed by a processor, cause the processor to implement any of the random access methods applied to a base station or UE.

In yet another example provided by the present disclosure, a computer program product including instructions is further provided, which when running on a computer, cause the computer to carry out any of the random access methods applied to a base station or UE.

In the above examples, it may be achieved in whole or in part by software, hardware, firmware or any combination thereof. When implemented in software, it can be implemented in whole or in part in the form of a computer program product. The computer program product includes one or more computer instructions. When the computer program instructions are loaded and executed on a computer, the processes or functions described in the examples of the present disclosure are generated in whole or in part. The computer may be a general purpose computer, special purpose computer, computer network, or other programmable device. The computer instructions may be stored in a computer readable storage medium or transmitted from one computer readable storage medium to another computer readable storage medium, for example, the computer instructions may be transmitted from a website, computer, server or data center to another website, computer, server, or data center by wire (such as coaxial cable, optical fiber, digital subscriber line (DSL)) or wirelessly (such as infrared, wireless, microwave, etc.). The computer-readable storage medium may be any usable medium that can be accessed by a computer or a data storage device such as a server and a data center and the like that includes an integration of one or more available media. The usable media may be magnetic media (such as a floppy disk, a hard disk, a magnetic tape), optical media (such as a DVD), or semiconductor medium( such as Solid State Disk (SSD)), and the like.

It should be noted that, relational terms here such as first and second and the like herein are only used to distinguish one entity or operation from another and do not necessarily require or imply any such actual relationship or order between these entities or operations. Moreover, the terms "comprising", "including" or any other variations thereof are intended to encompass a non-exclusive inclusion such that a process, method, article or device that includes a series of elements includes not only those elements, but also includes other elements not explicitly listed or other elements inherent to such a process, method, article or device. Without further limitation, elements defined by the phrase "comprising one..." do not preclude the presence of additional identical elements in a process, method, article or device that includes the mentioned elements.

The various examples in this specification are described in a related manner. Each example focuses on the differences from other examples, and the same and similar parts between the various examples can be referred to each other. Especially, for the examples of the apparatus, base station, UE, computer-readable storage medium and program product, the description is relatively simple because it is basically similar to the examples of the method, and the relevant points can be referred to the description of the examples of the method.

The above descriptions are only preferred examples of the present disclosure, and are not intended to limit the present disclosure. Any modifications, equivalent replacements, improvements and the like made within the spirit and principles of the present disclosure shall be included within the scope of protection of the present disclosure.

**Claims**

1. A random access method, which is applied to a base station, comprising:

   receiving a preamble reported by user equipment UE on a valid physical random access channel occasion RO resource, wherein the valid RO resource is selected from all of RO resources by the UE, and there is a first RO resource overlapping with a sub-band full duplex SBFD resource in all of the RO resources;
   sending a random access RA response to the UE based on the preamble, so that the UE randomly accesses the base station through contention based random access CBRA or through non contention or contention free random access CFRA.

2. The method according to claim 1, wherein, for each RO resource, if a frequency domain position of the RO resource exceeds an uplink subband and/or an uplink bandwidth part BWP used by the UE, the RO resource is invalid.

3. The method according to claim 1, wherein, for each RO resource, if the RO resource is located within an SBFD symbol and overlaps with a downlink time domain resource or a flexible time domain resource, the RO resource is valid, or a part of the RO resource located within the SBFD symbol and within an uplink BWP used by the UE is valid, wherein the downlink time domain resource comprises a downlink time slot and a downlink symbol, and the flexible time domain resource comprises a flexible time slot and a flexible symbol.

4. The method according to claim 1, wherein, for each RO resource, if a frequency domain position of the RO resource exceeds an uplink subband and/or an uplink BWP used by the UE, the RO resource is valid.

5. The method according to claim 1, further comprising:

   obtaining a first quantity of configured synchronization signal blocks SSBs;
   in a preset correlation cycle, correlating RO resources with the SSBs for in a time domain order according to the first quantity;
   for each RO resource, determining that the RO resource is invalid if the RO resource is correlated with none of the SSBs.

6. The method according to claim 5, wherein, in the preset correlation cycle, correlating the RO resources with the SSBs in the time domain order according to the first quantity, comprises:

   in the preset correlation cycle, in the time domain order, correlating a foremost second quantity of RO resources in a first UL resource and a second UL resource with the SSBs, wherein, the second quantity is a target product which is a product of the first quantity and a preset quantity of RO resources correlated with each of the SSBs, the first UL resource is a resource located within an uplink subband in an SBFD symbol, and the second UL resource is a resource for transmitting uplink data in a non-SBFD symbol; or
   in the preset correlation cycle, in the time domain order, correlating a foremost third quantity of RO resources in the first UL resource with the SSBs, and correlating a foremost fourth quantity of RO resources in the second UL resource with the SSBs, wherein, the third quantity and the fourth quantity are each the target product.

7. The method according to claim 5, wherein for each RO resource correlated with an SSB, if the RO resource is located in a first UL resource or the RO resource is located in a second UL resource, the RO resource is valid;
   wherein, the first UL resource is a resource located within an uplink subband in an SBFD symbol, and the second UL resource is a resource for transmitting uplink data in a non-SBFD symbol.

8. The method according to claim 5, wherein for each first RO resource correlated with an SSB, if the first RO resource spans a first UL resource and a second UL resource, the first RO resource valid;
   wherein the first UL resource is a resource located within an uplink subband in an SBFD symbol, and the second UL resource is a resource for transmitting uplink data in a non-SBFD symbol.

9. The method according to claim 5, wherein, for each first RO resource correlated with an SSB, if the first RO resource spans a first UL resource and a second UL resource, the first RO resource is invalid;
   wherein the first UL resource is a resource located within an uplink subband in an SBFD symbol, and the second UL resource is a resource for transmitting uplink data in a non-SBFD symbol.

10. The method according to claim 5, wherein, for each first RO resource correlated with an SSB, if the first RO resource is located in a first non-UL resource and a second UL resource, a part of the first RO resource located in the second UL resource is valid;

wherein the first non-UL resource is a resource outside an uplink subband in an SBFD symbol, and the second UL resource is a resource for transmitting uplink data in a non-SBFD symbol.

11. The method according to claim 5, wherein, for each first RO resource correlated with an SSB, if the first RO resource is located in a first non-UL resource and a second UL resource, the first RO resource is invalid;

wherein the first non-UL resource is a resource outside an uplink subband in an SBFD symbol, and the second UL resource is a resource for transmitting uplink data in a non-SBFD symbol.

12. The method according to claim 1, wherein:

when the UE supports full-duplex communication, multiple first RO resources located within an uplink subband of an SBFD symbol are valid;

when the UE supports half-duplex communication and does not support full-duplex communication, if a time domain position of a first RO resource located within the uplink subband in the SBFD symbol overlap with that of a target resource for transmitting data in a downlink channel, then the first RO resource whose priority is higher than that of the target resource based on a preset priority order is valid.

13. The method according to claim 12, wherein the preset priority order from high to low is: a cell-defining CD-SSB resource and a non-CD SSB resource, a Type0 type of resource in a physical downlink control channel PDCCH resource, a first RO resource, resources other than the Type0 type of resource in the PDCCH resource, and the target resource other than the CD-SSB resource, the non-CD SSB resource and the PDCCH resource.

14. The method according to claim 1, when the UE supports half-duplex communication and does not support full-duplex communication,

for each first RO resource, if a first time domain position of the first RO resource is located before a second time domain position of an SSB resource, the first RO resource is invalid;
and/or
for each first RO resource, if the first time domain position of the first RO resource is located after the second time domain position of the SSB resource, and a time interval between the second time domain position and the first time domain position is less than a preset time interval, the first RO resource is invalid.

15. The method according to claim 14, wherein,

if a subcarrier spacing of the preamble is 1.25 kHz or 5 kHz, the preset time interval is 0 symbol;
if the subcarrier spacing of the preamble is 15 kHz or 30 kHz or 60 kHz or 120 kHz, the preset time interval is 2 symbols;
if the subcarrier spacing of the preamble is 480 kHz, the preset time interval is 8 symbols;
if the subcarrier spacing of the preamble is 960 kHz, the preset time interval is 16 symbols.

16. The method according to claim 1, wherein when the UE performs physical random access channel PRACH repetition for the preamble, all of the RO resources are divided into multiple RO resource groups, and RO resources that are not divided into the RO resource groups are invalid, wherein a RO resource group is a set of RO resources with an adjacent arrangement order, and the arrangement order of the RO resources is incremented according to frequency domain positions of the RO resources from low to high, and time domain positions of the same from front to back.

17. The method according to claim 16, wherein the RO resource groups are obtained by grouping RO resources in an SBFD symbol, or by grouping RO resources in the SBFD symbol and a non-SBFD symbol, or by grouping RO resources in the non-SBFD symbol.

18. The method according to claim 17, wherein before receiving the preamble reported by the UE on the valid random access channel occasion RO resource, the method further comprises:
broadcasting a first signaling, wherein the first signaling comprises a first parameter, when a value of the first parameter is a first value, the first parameter indicates that the RO resource groups are obtained by grouping the RO resources in the SBFD symbol; when the value of the first parameter is a second value, the first parameter indicates that the RO resource groups are obtained by grouping the RO resources in the SBFD symbol and the non-SBFD symbol; when the value of the first parameter is a third value, the first parameter indicate that the RO resource groups are obtained by grouping the RO resources in the non-SBFD symbol.

19. The method according to claim 18, wherein the first signaling further comprises a second parameter, wherein second parameter indicates a quantity of RO resource subgroups between the RO resource groups, and a RO resource subgroup is a set of RO resources at a same time domain position.

20. The method according to claim 19, wherein, when the RO resource groups are obtained by grouping the RO resources in the SBFD symbol, the second parameter is the quantity of RO resource subgroups in the SBFD symbol between the RO resource groups;

when the RO resource groups are obtained by grouping the RO resources in the SBFD symbol and the non-SBFD symbol, the second parameter is the quantity of RO resource subgroups in the SBFD symbol and the non-SBFD symbol between the RO resource groups;
when the RO resource groups are obtained by grouping the RO resources in the non-SBFD symbol, the second parameter is the quantity of RO resource subgroups in the non-SBFD symbol between the RO resource groups.

21. The method according to claim 19, wherein when the number of PRACH repetitions is 8, a value of the second parameter is 16;

when the number of PRACH repetitions is 4, the value of the second parameter is 8 or 16;
when the number of PRACH repetitions is 2, the value of the second parameter is 4, 8 or 16.

22. The method according to any one of claims 1-21, further comprising:

broadcasting a second signaling;
wherein the second signaling comprises a third parameter and/or a fourth parameter; the third parameter indicates frequency domain positions of multiple first RO resources, and the fourth parameter represents the number of first RO resources at a same time domain position.

23. The method according to claim 22, wherein the third parameter indicates a frequency difference between a starting frequency of a first RO resource with a lowest frequency and a starting frequency of a RB where the first RO resource is located.

24. A random access method, which is applied to user equipment UE, comprising:

selecting a valid physical random access channel occasion RO resource from all of RO resources, wherein all of the RO resources comprise multiple first RO resources overlapping with a sub-band full duplex SBFD resource;
reporting a preamble to a base station through the selected valid RO resource, so that the base station sends a random access RA response to the UE based on the preamble;
based on the RA response, randomly accessing the base station through contention based random access CBRA or through non contention or contention free random access CFRA.

25. The method according to claim 24, wherein, for each RO resource, if a frequency domain position of the RO resource exceeds an uplink subband and/or an uplink bandwidth part BWP used by the UE, the RO resource is invalid.

26. The method according to claim 24, wherein, for each RO resource, if the RO resource is located within an SBFD symbol and overlaps with a downlink time domain resource or a flexible time domain resource, the RO resource is valid, or a part of the RO resource located within the SBFD symbol and within an uplink BWP used by the UE is valid, wherein the downlink time domain resource comprises a downlink time slot and a downlink symbol, and the flexible time domain resource comprises a flexible time slot and a flexible symbol.

27. The method according to claim 24, wherein, for each RO resource, if a frequency domain position of the RO resource exceeds an uplink subband and/or an uplink BWP used by the UE, the RO resource is valid.

28. The method according to claim 26, wherein when the selected valid RO resource is a part of the RO resource located within the SBFD symbol and within the uplink BWP, reporting the preamble to the base station through the selected valid RO resource, comprises:
reporting the preamble to the base station according to a target subcarrier spacing through the selected valid RO resource, wherein the target subcarrier spacing is a preset subcarrier spacing or a minimum subcarrier spacing or a maximum subcarrier spacing that matches a quantity of RBs.

29. The method according to claim 24, further comprising:

obtaining a first quantity of configured synchronization signal blocks SSBs;
in a preset correlation cycle, correlating RO resources with the SSBs in a time domain order according to the first quantity;
for each RO resource, determining that the RO resource is invalid if the RO resource is correlated with none of the SSBs.

30. The method according to claim 29, wherein in the preset correlation cycle, correlating the RO resources with the SSBs in the time domain order according to the first quantity, comprises:

in the preset correlation cycle, in the time domain order, correlating a foremost second quantity of RO resources in a first UL resource and a second UL resource with the SSBs, wherein, the second quantity is a target product which is a product of the first quantity and a preset quantity of RO resources correlated with each of the SSBs, the first UL resource is a resource located within an uplink subband in an SBFD symbol, and the second UL resource is a resource for transmitting uplink data in a non-SBFD symbol; or
in the preset correlation cycle, in the time domain order, correlating a foremost third quantity of RO resources in the first UL resource with the SSBs, and correlating a foremost fourth quantity of RO resources in the second UL resource with the SSBs, wherein, the third quantity and the fourth quantity are each the target product.

31. The method according to claim 29, wherein for each RO resource correlated with an SSB, if the RO resource is located in a first UL resource or the RO resource is located in a second UL resource, the RO resource is valid;
wherein, the first UL resource is a resource located within an uplink subband in an SBFD symbol, and the second UL resource is a resource for transmitting uplink data in a non-SBFD symbol.

32. The method according to claim 29, wherein for each first RO resource correlated with an SSB, if the first RO resource spans a first UL resource and a second UL resource, the first RO resource valid;
wherein the first UL resource is a resource located within an uplink subband in an SBFD symbol, and the second UL resource is a resource for transmitting uplink data in a non-SBFD symbol.

33. The method according to claim 29, wherein, for each first RO resource correlated with an SSB, if the first RO resource spans a first UL resource and a second UL resource, the first RO resource is invalid;
wherein the first UL resource is a resource located within an uplink subband in an SBFD symbol, and the second UL resource is a resource for transmitting uplink data in a non-SBFD symbol.

34. The method according to claim 29, wherein, for each first RO resource correlated with an SSB, if the first RO resource is located in a first non-UL resource and a second UL resource, a part of the first RO resource located in the second UL resource is valid;
wherein the first non-UL resource is a resource outside an uplink subband in an SBFD symbol, and the second UL resource is a resource for transmitting uplink data in a non-SBFD symbol.

35. The method according to claim 29, wherein, for each first RO resource correlated with an SSB, if the first RO resource is located in a first non-UL resource and a second UL resource, the first RO resource is invalid;
wherein the first non-UL resource is a resource outside an uplink subband in an SBFD symbol, and the second UL resource is a resource for transmitting uplink data in a non-SBFD symbol.

36. The method according to claim 24, wherein:

when the UE supports full-duplex communication, the multiple first RO resources located within an uplink subband of an SBFD symbol are valid;
when the UE supports half-duplex communication and does not support full-duplex communication, if a time domain position of a first RO resource located within the uplink subband in the SBFD symbol overlaps with that of a target resource for transmitting data in a downlink channel, then the first RO resource whose priority is higher than that of the target resource based on a preset priority order is valid.

37. The method according to claim 36, wherein the preset priority order is: a cell-defining CD-SSB resource and a non-CD SSB resource, a Type0 type of resource in a physical downlink control channel PDCCH resource, a first RO resource, resources other than the Type0 type of resource in the PDCCH resource, and the target resource other than the CD-SSB resource, the non-CD SSB resource and the PDCCH resource.

38. The method according to claim 24, wherein when the UE supports half-duplex communication and does not support full-duplex communication, for each first RO resource, if a first time domain position of the first RO resource is located before a second time domain position of an SSB resource, the first RO resource is invalid;
and/or
for each first RO resource, if the first time domain position of the first RO resource is located after the second time domain position of the SSB resource, and a time interval between the second time domain position and the first time domain position is less than a preset time interval, the first RO resource is invalid.

39. The method according to claim 38, wherein,

if a subcarrier spacing of the preamble is 1.25 kHz or 5 kHz, the preset time interval is 0 symbol;
if the subcarrier spacing of the preamble is 15 kHz or 30 kHz or 60 kHz or 120 kHz, the preset time interval is 2 symbols;
if the subcarrier spacing of the preamble is 480 kHz, the preset time interval is 8 symbols;
if the subcarrier spacing of the preamble is 960 kHz, the preset time interval is 16 symbols.

40. The method according to claim 24, wherein when the UE performs physical random access channel PRACH repetition for the preamble, all of the RO resources are divided into multiple RO resource groups, and RO resources that are not divided into the RO resource groups are invalid, wherein a RO resource group is a set of RO resources with an adjacent arrangement order, and the arrangement order of the RO resources is incremented according to frequency domain positions of the RO resources from low to high, and time domain positions of the same from front to back.

41. The method according to claim 40, wherein the RO resource groups are obtained by grouping RO resources in an SBFD symbol, or by grouping RO resources in the SBFD symbol and a non-SBFD symbol, or by grouping RO resources in the non-SBFD symbol.

42. The method according to claim 41, wherein before selecting the valid physical random access channel occasion RO resource from all of the RO resources, the method further comprises:
receiving a first signaling broadcast by the base station, wherein the first signaling comprises a first parameter, when a value of the first parameter is a first value, the first parameter indicates that the RO resource groups are obtained by grouping the RO resources in the SBFD symbol; when the value of the first parameter is a second value, the first parameter indicates that the RO resource groups are obtained by grouping the RO resources in the SBFD symbol and the non-SBFD symbol; when the value of the first parameter is a third value, the first parameter indicate that the RO resource groups are obtained by grouping the RO resources in the non-SBFD symbol.

43. The method according to claim 42, wherein the first signaling further comprises a second parameter, wherein second parameter indicates a quantity of RO resource subgroups between the RO resource groups, and a RO resource subgroup is a set of RO resources at a same time domain position.

44. The method according to claim 43, wherein, when the RO resource groups are obtained by grouping the RO resources in the SBFD symbol, the second parameter is the quantity of RO resource subgroups in the SBFD symbol between the RO resource groups;

when the RO resource groups are obtained by grouping the RO resources in the SBFD symbol and the non-SBFD symbol, the second parameter is the quantity of RO resource subgroups in the SBFD symbol and the non-SBFD symbol between the RO resource groups;
when the RO resource groups are obtained by grouping the RO resources in the non-SBFD symbol, the second parameter is the quantity of RO resource subgroups in the non-SBFD symbol between the RO resource groups.

45. The method according to claim 43, wherein when the number of PRACH repetitions is 8, a value of the second parameter is 16;

when the number of PRACH repetitions is 4, the value of the second parameter is 8 or 16;
when the number of PRACH repetitions is 2, the value of the second parameter is 4, 8 or 16.

**46.** The method according to any one of claims 24 to 45, further comprising:

receiving a second signaling broadcast by the base station;
wherein the second signaling comprises a third parameter and/or a fourth parameter; the third parameter indicates frequency domain positions of the multiple first RO resources, and the fourth parameter indicates the number of first RO resources at a same time domain position.

**47.** The method according to claim 46, wherein the third parameter indicates a frequency difference between a starting frequency of a first RO resource with a lowest frequency and a starting frequency of a RB where the first RO resource is located.

**48.** The method according to any one of claims 24-45, wherein, when a random access process of the UE is initiated by a PDCCH command, a time difference between a time when the UE receives the PDCCH command and a time when the UE reports the preamble is greater than or equal to a target time difference, wherein the target time difference is calculated based on a preparation time of the UE for a Physical Uplink Shared Channel PUSCH, a BWP switching time, a channel delay, and a switching time between uplink carriers.

**49.** The method according to claim 48, wherein the target time difference is calculated based on a following formula:

$$T = \mathrm{N}_{\mathrm{T},2} + \Delta_{\mathrm{BWPSwitching}} + \Delta_{\mathrm{Delay}} + \mathrm{T}_{\mathrm{switch}}$$

wherein, T is the target time difference, $\mathrm{N}_{\mathrm{T},2}$ is the preparation time of the UE for PUSCH, $\Delta_{\mathrm{BWPSwitching}}$ is the BWP switching time, $\Delta_{\mathrm{Delay}}$ is the channel delay, and $\mathrm{T}_{\mathrm{switch}}$ is the switching time between uplink carriers.

**50.** A random access apparatus, which is applied to a base station, comprising:

a preamble receiving module, to receive a preamble reported by user equipment UE on a valid physical random access channel occasion RO resource, wherein the valid RO resource is selected from all of RO resources by the UE, and there is a first RO resource overlapping with a sub-band full duplex SBFD resource in all of the RO resources;
a first random access module, to send a random access RA response to the UE based on the preamble, so that the UE randomly accesses the base station through contention based random access CBRA or through non contention or contention free random access CFRA.

**51.** The apparatus according to claim 50, wherein the apparatus is further to carry out the method of any one of claims 2-23.

**52.** A random access apparatus, which is applied to user equipment UE, comprising:

a resource selecting module, to select a valid physical random access channel occasion RO resource from all of RO resources, wherein all of the RO resources comprise multiple first RO resources overlapping with a sub-band full duplex SBFD resource;
a preamble reporting module, to report a preamble to a base station through the selected valid RO resource, so that the base station sends a random access RA response to the UE based on the preamble;
a second random access module, to randomly access the base station based on the RA response, through contention based random access CBRA or through non contention or contention free random access CFRA.

**53.** The apparatus according to claim 52, wherein the apparatus is further to carry out the method of any one of claims 25-49.

**54.** A base station, comprising:

a processor;
a transceiver;

a machine-readable storage medium having machine-executable instructions therein that can be executed by the processor; the machine-executable instructions cause the processor to:

receive a preamble reported by user equipment UE on a valid physical random access channel occasion RO resource, wherein the valid RO resource is selected from all of RO resources by the UE, and there is a first RO resource overlapping with a sub-band full duplex SBFD resource in all of the RO resources;

send a random access RA response to the UE based on the preamble, so that the UE randomly accesses the base station through contention based random access CBRA or through non contention or contention free random access CFRA.

55. The base station according to claim 54, wherein the machine-executable instructions further cause the processor to carry out the method of any one of claims 2-23.

56. User equipment UE, comprising:

a processor;
a transceiver;
a machine-readable storage medium having machine-executable instructions stored therein that can be executed by the processor; the machine-executable instructions cause the processor to:

select a valid physical random access channel occasion RO resource from all of RO resources, wherein all of the RO resources comprise multiple first RO resources overlapping with a sub-band full duplex SBFD resource;

report a preamble to a base station through the selected valid RO resource, so that the base station sends a random access RA response to the UE based on the preamble;

based on the RA response, randomly accessing the base station through contention based random access CBRA or through non contention or contention free random access CFRA.

57. The UE according to claim 56, wherein the machine-executable instructions further cause the processor to carry out the method of any one of claims 25-49.

FIG. 1

FIG. 2

S301

receiving a preamble reported by UE on a valid RO resource

S302

sending a RA response to the UE based on the preamble, so that the UE randomly accesses the base station through CBRA or CFRA

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

| DL | DL | F | F | | DL | DL | F | F |
|----|----|----|----|----|----|----|----|----|
| UL | UL RO resource RO resource | UL RO resource RO resource | UL RO resource RO resource | UL RO resource RO resource | UL | UL RO resource RO resource | UL RO resource RO resource | UL RO resource RO resource | UL RO resource RO resource |
| DL | DL | F | F | | DL | DL | F | F |

FIG. 16

| DL | DL | F | F | | DL | DL | F | F |
|----|----|----|----|----|----|----|----|----|
| UL | UL RO resource RO resource | UL RO resource RO resource | UL RO resource RO resource | UL RO resource RO resource | UL | UL RO resource RO resource | UL RO resource RO resource | UL RO resource RO resource | UL RO resource RO resource |
| DL | DL | F | F | | DL | DL | F | F |

FIG. 17

| DL | DL | F | F | | DL | DL | F | F |
|----|----|---|---|---|----|----|---|---|
| UL | UL | UL | UL | UL | UL | UL | UL | UL |
| | RO resource | RO resource | RO resource | RO resource | | RO resource | RO resource | RO resource | RO resource |
| | RO resource | RO resource | RO resource | RO resource | | RO resource | RO resource | RO resource | RO resource |
| DL | DL | F | F | | DL | DL | F | F |

FIG. 18

| DL | DL | F | F | | DL | DL | F | F |
|----|----|---|---|---|----|----|---|---|
| UL | UL | UL | UL | UL | UL | UL | UL | UL |
| | RO resource | RO resource | RO resource | RO resource | | RO resource | RO resource | RO resource | RO resource |
| | RO resource | RO resource | RO resource | RO resource | | RO resource | RO resource | RO resource | RO resource |
| DL | DL | F | F | | DL | DL | F | F |

FIG. 19

S304
```
broadcasting a second signaling
```

S301
```
receiving a preamble reported by UE on a valid RO resource
```

S302
```
sending a RA response to the UE based on the preamble, so
that the UE randomly accesses the base station through CBRA
or CFRA
```

FIG. 20

FIG. 21

FIG. 22

S2301

selecting a valid RO resource from all RO resources

S2302

reporting a preamble to a base station through the selected valid RO resource, so that the base station sends an RA response to the UE based on the preamble

S2303

based on the RA response, randomly accessing the base station through CBRA or CFRA

FIG. 23

2401

Preamble receiving module

2402

First random access module

FIG. 24

2501

Resource selecting module

2502

Preamble reporting module

2503

Second random access module

FIG. 25

Processor — 2601

Communication bus 2603

Transceiver — 2604

Machine-readable storage medium — 2602

Machine-executable instructions

FIG. 26

Processor — 2701

Communication bus 2703

Transceiver — 2704

Machine-readable storage medium — 2702

Machine-executable instructions

FIG. 27

## INTERNATIONAL SEARCH REPORT

| International application No. |
|---|
| **PCT/CN2024/090197** |

**A. CLASSIFICATION OF SUBJECT MATTER**

H04W 74/0833(2024.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, VEN, WPABS, USTXT, EPTXT, WOTXT, CNKI, 3GPP: 复用, 前导码, 物理随机接入信道, 时机, 重叠, 重合, 资源, 子带全双工, Multiplexing, Preamble, Physical Random Access Channel, Occasion, Overlap, Coincidence, Resource, Sub-band Full Duplex, RACH, RO, SBFD

**C. DOCUMENTS CONSIDERED TO BE RELEVANT**

| Category* | Citation of document, with indication, where appropriate, of the relevant passages | Relevant to claim No. |
|---|---|---|
| X | WO 2024031708 A1 (NEW H3C TECHNOLOGIES CO., LTD.) 15 February 2024 (2024-02-15) description, paragraphs [0022]-[0154] and [0412]-[0414] | 1-57 |
| X | WO 2023211182 A1 (SAMSUNG ELECTRONICS CO., LTD.) 02 November 2023 (2023-11-02) description, paragraphs [0309]-[0425] | 1-57 |
| A | CN 115315016 A (VIVO MOBILE COMMUNICATION CO., LTD.) 08 November 2022 (2022-11-08) entire document | 1-57 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 January 2025** | **11 January 2025** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/090197**

| Patent document cited in search report | | | Publication date (day/month/year) | Patent family member(s) | | | Publication date (day/month/year) |
|---|---|---|---|---|---|---|---|
| WO | 2024031708 | A1 | 15 February 2024 | EP | 4425859 | A1 | 04 September 2024 |
| | | | | JP | 2024546150 | A | 17 December 2024 |
| WO | 2023211182 | A1 | 02 November 2023 | KR | 20230153138 | A | 06 November 2023 |
| CN | 115315016 | A | 08 November 2022 | None | | | |

Form PCT/ISA/210 (patent family annex) (July 2022)